# EUROPÄISCHE PATENTSCHRIFT

(11) **EP 3 600 957 B1**
(45) Veröffentlichungstag und Bekanntmachung des Hinweises auf die Patenterteilung: **30.08.2023**
(21) Anmeldenummer: 18708688.9
(22) Anmeldetag: 05.03.2018
(51) Int. Cl.: B60N 2/50, B60N 2/02, B60N 2/18, B64D 11/06

(54) **PASSAGIERSITZ MIT EINEM ERWEITERBAREN SITZELEMENT UND PASSAGIERKABINENBEREICH**
PASSENGER SEAT WITH AN EXTENDABLE SEATING ELEMENT AND A PASSENGER CABIN
SIÈGE DE PASSAGER AVEC ÉLÉMENT DE SIÈGE EXTENSIBLE ET ESPACE CABINE PASSAGER

(30) Priorität: 23.03.2017 DE 102017204894
(43) Veröffentlichungstag der Anmeldung: 05.02.2020
(73) Patentinhaber: Airbus Operations GmbH, 21129 Hamburg (DE)
(72) Erfinder: CORDES, Frank, 21129 Hamburg (DE); MEISTER, Juergen, 21129 Hamburg (DE)
(74) Vertreter: Schicker, Silvia
(86) Internationale Anmeldenummer: PCT/EP2018/055305
(87) Internationale Veröffentlichungsnummer: WO 2018/172046

(56) Entgegenhaltungen:
- GB-A- 2 438 090
- JP-A- 2012 111 362
- US-A1- 2009 224 584

## Beschreibung

Die Erfindung betrifft einen Passagiersitz, der zum Einsatz in der Passagierkabine eines Flugzeugs, aber auch zum Einsatz in anderen Verkehrsmitteln, wie zum Beispiel Bussen oder Zügen geeignet ist. Ferner betrifft die Erfindung einen mit einem derartigen Passagiersitz ausgestatteten Passagierkabinenbereich.

In modernen Verkehrsmitteln, insbesondere in Flugzeugen, ist die optimale Ausnutzung des in einer Passagierkabine zur Verfügung stehenden Raums von großer wirtschaftlicher Bedeutung. Daher werden, insbesondere in der Economy Class einer Flugzeugpassagierkabine, hintereinander angeordnete Sitzreihen in möglichst geringen Abständen voneinander positioniert. In zu Notausgängen benachbarten Bereichen einer Flugzeugpassagierkabine ist es jedoch erforderlich, zwischen hintereinander angeordneten Sitzreihen Quergänge vorzusehen, die einen sich entlang einer Längsachse der Flugzeugpassagierkabine erstreckenden Hauptgang mit den sich beispielsweise oberhalb der Flügel befindlichen Notausgängen verbinden. Um im Fall einer Notevakuierung einen schnellen Passagierstrom zu den Notausgängen zu ermöglichen, müssen diese Quergänge eine vorgegebene Breite von beispielsweise 33.02 cm (13 Zoll) haben. Dementsprechend müssen an die Quergänge angrenzende Sitzreihen in einem relativ weiten Abstand voneinander angeordnet sein.

Die EP 1 452 444 B1 bzw. die US 7,083,146 B1 beschreibt eine Sitzreihenanordnung für eine Passagierkabine eines Verkehrsflugzeuges mit hintereinander angeordneten Sitzreihen, wobei die Sitzreihen mit vorbestimmten Sitzabständen angeordnet sind. Im Bereich von Ausgängen ist ein durch einen vergrößerten Sitzabstand der Sitzreihen gebildeter Quergang als Zugang zu den Ausgängen vorgesehen. Mindestens eine an den Quergang angrenzende Sitzreihe ist mit Passagiersitzen mit hochklappbarem Sitzteil ausgestattet, sodass die Breite des Querganges durch das Hochschwenken des entsprechenden Sitzteils in eine größere Breite wandelbar ist.

GB 2 438 090 A offenbart einen Sitz mit einer Sitzschale und einer Rückenlehne. Die Sitzschale ist um eine erste Schwenkachse schwenkbar mit einer Tragstruktur verbunden. Die Sitzschale ist mit der Rückenlehne um eine zweite Schwenkachse schwenkbar verbunden. Der Winkel der Sitzschale relativ zu der Tragstruktur des Sitzes kann durch eine Sitzschalen-Einstellvorrichtung gesteuert und eingestellt werden, die eine Gasdruckfeder oder ein anderes längenvariables Strukturelement aufweist.

Die US 5,435,623 beschreibt einen interaktiven Loungesessel, der eine Rückenlehne sowie ein zweiteiliges Sitzelement umfasst. Ein vorderes Segment des Sitzelements ist über einen Scharniermechanismus schwenkbar mit einem hinteren Segment des Sitzelements verbunden. Ein Untergestell des Sessels umfasst eine vertikale Stütze, eine relativ zu der vertikalen Stütze geneigte obere Verlängerung sowie einen nach oben gerichteten Arm. Der Arm ist über einen Scharniermechanismus mit einer Unterseite des vorderen Segments des Sitzelements verbunden. Wenn der Sessel nicht in Benutzung ist, ist das vordere Segment des Sitzelements relativ zu dem hinteren Segment nach unten geklappt, während das hintere Segment durch eine Feder relativ zu der oberen Verlängerung des Untergestells in einer angehobenen Position gehalten wird. Wenn dagegen ein Nutzer auf dem Sessel Platz nimmt, wird das hintere Segment des Sitzelements in Richtung der oberen Verlängerung des Untergestells abgesenkt und das vordere Segment nach oben geklappt.

Der Erfindung liegt die Aufgabe zugrunde, einen Passagiersitz bereitzustellen, der unter Einhaltung aller Sicherheitsanforderungen für Abmessungen von Notausgangzugängen eine optimale Ausnutzung des in der Passagierkabine eines Flugzeugs oder eines anderen Verkehrsmittels zur Verfügung stehenden Raums ermöglicht. Ferner liegt der Erfindung die Aufgabe zugrunde, einen mit einem derartigen Passagiersitz ausgestatteten Passagierkabinenbereich anzugeben.

Diese Aufgabe wird durch einen Passagiersitz mit den Merkmalen des Patentanspruchs 1 und einen Passagierkabinenbereich mit den Merkmalen des Patentanspruchs 15 gelöst.

Ein Passagiersitz umfasst eine Rückenlehne sowie ein Sitzelement. Die Rückenlehne ist vorzugsweise relativ zu dem Sitzelement zwischen einer aufrechten Position, in der sich eine Rückenlehnenfläche der Rückenlehne im Wesentlichen senkrecht zu einer Sitzfläche des Sitzelements erstreckt, und einer zurückgelehnten Position, in der die Rückenlehnenfläche der Rückenlehne mit der Sitzfläche des Sitzelements einen Winkel größer 90° bildet, verschwenkbar. Der Begriff "Sitzfläche" bezeichnet hier eine der Rückenlehne zugewandte Oberfläche des Sitzelements, auf der ein Benutzer des Passagiersitzes in üblicher Weise Platz nehmen kann. Der Begriff "Rückenlehnenfläche" bezeichnet hier eine vordere Oberfläche der Rückenlehne, an der sich ein Benutzer des Passagiersitzes in üblicher Weise anlehnen kann, wenn er auf der Sitzfläche des Sitzelements sitzt.

Ferner umfasst der Passagiersitz einen Vergrößerungsmechanismus, der dazu eingerichtet ist, eine Gewichtskraft, die auf das Sitzelement wirkt, wenn ein Benutzer auf dem Passagiersitz sitzt, in eine Vergrößerung einer Tiefe einer für den Benutzer nutzbaren Sitzfläche des Sitzelements von einer Ruhepositionstiefe in eine Nutzungspositionstiefe umzusetzen. Unter dem Begriff "Tiefe" wird hier eine Abmessung der Sitzfläche von einem der Rückenlehne zugewandten hinteren Rand des Sitzelements bis zu einem von der Rückenlehne abgewandten vorderen Rand des Sitzelements verstanden. Wenn der Passagiersitz nicht in Benutzung ist und keine Gewichtskraft auf das Sitzelement wirkt, hat das Sitzelement die geringere Ruhepositionstiefe und folglich einen geringeren Platzbedarf als in einer Betriebssituation, in der sich der Passagiersitz in Benutzung befindet. Wenn der Passagiersitz benutzt wird und ein auf dem Sitzelement sitzender Benutzer eine Gewichtskraft auf das Sitzelement aufbringt, sorgt der Vergrößerungsmechanismus dagegen für eine Vergrößerung der Tiefe der Sitzfläche auf die Nutzungspositionstiefe, sodass der Benutzer bequem auf dem Sitzelement, d.h. auf der Sitzfläche des Sitzelements sitzen kann.

Wenn der Passagiersitz in einer Passagierkabine eines Verkehrsmittels, beispielsweise eines Flugzeugs, verbaut ist, hat der vordere Rand des Sitzelements im unbenutzten Zustand des Passagiersitzes somit einen größeren Abstand von einem vor dem Passagiersitz befindlichen Vordersitz als im benutzten Zustand des Passagiersitzes. Der Passagiersitz kann daher in vorteilhafter Weise in einer Passagierkabine eines Verkehrsmittels angrenzend an einen Quergang verbaut werden, der einen Zugang zu weiteren, seitlich von dem Passagiersitzes angeordneten Passagiersitzen oder einem Ausgang, insbesondere einem Notausgang der Passagierkabine vermittelt. Insbesondere kann der Passagiersitz derart angrenzend an den Quergang angeordnet werden, dass das Sitzelement des Passagiersitzes dem Gang zugewandt ist.

Im Normalbetrieb des Verkehrsmittels kann der Passagiersitz dann in üblicher Weise und ohne Komforteinbußen für einen auf dem Passagiersitz sitzenden Passagier genutzt werden. Wenn dagegen Passagiere durch den Quergang zu den seitlich von dem Passagiersitz angeordneten Passagiersitzen oder dem Ausgang gelangen müssen, kann der Passagiersitz außer Benutzung genommen und das Sitzelement wieder in seinen Ausgangsbetriebszustand mit verringerter Sitzflächentiefe gebracht werden. Dadurch verbreitert sich der Quergang, sodass das Passieren des Quergangs deutlich erleichtert und folglich beschleunigt wird. Der Passagiersitz ermöglicht somit eine optimale Ausnutzung des in der Passagierkabine zur Verfügung stehenden Raums. Gleichzeitig können alle Sicherheitsanforderungen für Abmessungen von Zugängen zu Ausgängen, insbesondere Notausgängen eingehalten werden. Besonders vorteilhaft ist der Passagiersitz in einer Flugzeugpassagierkabine benachbart zu einem sich oberhalb eines Flügels befindlichen Notausgang einsetzbar, um eine vorgegebene Gangbreite von 33.02 cm (13 Zoll) zu gewährleisten.

In einer bevorzugten Ausführungsform des Passagiersitzes ist der Vergrößerungsmechanismus dazu eingerichtet ist, einen Wegfall der auf das Sitzelement wirkenden Gewichtskraft in eine Verringerung der Tiefe der für den Benutzer nutzbaren Sitzfläche des Sitzelements von der Nutzungspositionstiefe in die Ruhepositionstiefe umzusetzen. Bei einer derartigen Ausgestaltung des Passagiersitzes ist sichergestellt, dass die Tiefe der Sitzfläche und folglich der Platzbedarf des Sitzelements automatisch verringert wird, sobald der Passagiersitz nicht mehr in Benutzung ist, d. h. sobald ein auf dem Passagiersitz sitzender Benutzer von dem Sitz aufsteht. Zusätzliche manuelle Umbaumaßnahmen zur Verringerung der Sitzflächentiefe können dadurch entfallen, sodass der Passagiersitz besonders rasch und einfach in einen Betriebszustand gebracht werden kann, in der das Sitzelement einen verringerten Platzbedarf hat und dadurch zusätzlichen Freiraum beispielsweise in einem an den Passagiersitz angrenzenden Quergang schafft.

Der Passagiersitz umfasst ferner einen Sitzelementträger. Der Sitzelementträger kann beispielsweise an einer Unterkonstruktion befestigbar sein, die ihrerseits in einer in einem Boden einer Passagierkabine eines Verkehrsmittels vorgesehenen Sitzschiene befestigbar ist. Das Sitzelement des Passagiersitzes ist um eine Schwenkachse relativ zu dem Sitzelementträger zwischen einer Ruheposition und einer Nutzungsposition verschwenkbar an dem Sitzelementträger befestigt. Die Schwenkachse ist vorzugsweise im Bereich eines von der Rückenlehne abgewandten vorderen Rands des Sitzelementträgers angeordnet. Das Sitzelement ist über die Schwenkachse derart mit dem Sitzelementträger verbunden, dass ein der Rückenlehne zugewandter hinterer Rand des Sitzelements frei relativ zu dem Sitzelementträger und folglich auch relativ zu der Rückenlehne verschwenkbar ist.

Wenn sich das Sitzelement in seiner Ruheposition befindet, bildet die Sitzfläche des Sitzelements mit einer dem Sitzelement zugewandten Trägeroberfläche des Sitzelementträgers insbesondere einen Winkel von 5 bis 60°, vorzugsweise einen Winkel von 10 bis 30° und insbesondere bevorzugt einen Winkel von 10 bis 20°. Mit anderen Worten, in der Ruheposition des Sitzelements ist die Sitzfläche des Sitzelements relativ zu der Trägeroberfläche des Sitzelementträgers geneigt, sodass das Sitzelement in seiner Ruheposition in einer Richtung senkrecht zu der Rückenlehnenfläche der Rückenlehne nach vorne einen verringerten Platzbedarf hat. Dadurch kann im unbenutzten Zustand des Passagiersitzes der Abstand zwischen dem vorderen Rand des Sitzelements und einem vor dem Passagiersitz befindlichen Vordersitz weiter vergrößert werden. Wenn sich das Sitzelement in seiner Nutzungsposition befindet, erstreckt sich die Sitzfläche des Sitzelements dagegen im Wesentlichen parallel zu der dem Sitzelement zugewandten Trägeroberfläche des Sitzelementträgers und/oder im Wesentlichen senkrecht zu der Rückenlehnenfläche der Rückenlehne, sofern sich die Rückenlehne in einer aufrechten Position befindet. Dadurch wird gewährleistet, dass ein Benutzer bequem auf dem Passagiersitz sitzen kann.

Grundsätzlich ist es denkbar, dass das Sitzelement derart um die Schwenkachse schwenkbar an dem Sitzelementträger befestigt ist, dass die Sitzfläche des Sitzelements in der Ruheposition des Sitzelements ausgehend von dem vorderen Rand des Sitzelementträgers in Richtung der Rückenlehne nach unten geneigt ist. Vorzugsweise ist das Sitzelement aber derart um die Schwenkachse schwenkbar an dem Sitzelementträger befestigt, dass die Sitzfläche des Sitzelements in der Ruheposition des Sitzelements ausgehend von dem vorderen Rand des Sitzelementträgers in Richtung der Rückenlehne nach oben ansteigt, d. h. betrachtet von der Rückenlehne aus eine nach vorne abschüssige Fläche bildet.

In einer bevorzugten Ausführungsform umfasst der Passagiersitz ferner einen Vorspannmechanismus, der dazu eingerichtet ist, das Sitzelement in seine Ruheposition vorzuspannen. Durch die Ausstattung des Passagiersitzes mit einem Vorspannmechanismus wird sichergestellt, dass das Sitzelement automatisch in seine Ruheposition, in der das Sitzelement einen verringerten Platzbedarf hat, überführt wird, wenn der Passagiersitz nicht in Benutzung ist. Insbesondere ist der Vorspannmechanismus dazu eingerichtet, das Sitzelement in eine Ruheposition zu drängen, in der die Sitzfläche des Sitzelements ausgehend von dem vorderen Rand des Sitzelementträgers in Richtung der Rückenlehne nach oben geneigt ist. Der Vorspannmechanismus ist dann vorzugsweise so dimensioniert, dass die von ihm aufgebrachte Vorspannkraft geringer ist als die Gewichtskraft, die ein Benutzer des Passagiersitzes auf das Sitzelement aufbringt, wenn er auf dem Passagiersitz Platz nimmt bzw. auf dem Passagiersitz sitzt. Dadurch wird sichergestellt, dass das Sitzelement auf einfache Art und Weise in seine Nutzungsposition überführt und in seiner Nutzungsposition gehalten werden kann, wenn sich ein Benutzer auf den Passagiersitz setzt bzw. auf dem Passagiersitz sitzt.

In einer bevorzugten Ausführungsform umfasst der Vorspannmechanismus ein Federelement, das ein erstes Ende sowie ein zweites Ende umfassen kann. Das erste Ende des Federelements kann sich an der Trägeroberfläche des Sitzelementträgers abstützen. Das zweite Ende des Federelements kann sich dagegen sich an einer der Trägeroberfläche des Sitzelementträgers zugewandten Unterseite des Sitzelements abstützen.

In einer besonders bevorzugten Ausführungsform umfasst der Passagiersitz ferner einen Getriebemechanismus, der dazu eingerichtet ist, eine Schwenkbewegung des Sitzelements um die Schwenkachse in eine Aktivierung bzw. Deaktivierung des Vergrößerungsmechanismus umzusetzen. Insbesondere ist der Getriebemechanismus dazu eingerichtet, eine Schwenkbewegung des Sitzelements um die Schwenkachse aus seiner Ruheposition in seine Nutzungsposition in eine Aktivierung des Vergrößerungsmechanismus umzusetzen. Dadurch ist der Passagiersitz besonders komfortabel bedienbar, da das Aufbringen einer Gewichtskraft auf das Sitzelement bei der Inbenutzungnahme des Passagiersitzes automatisch eine Aktivierung des Vergrößerungsmechanismus bewirkt, ohne dass der Benutzer weitere Maßnahmen zur Vergrößerung der Sitzflächentiefe des Sitzelements von der Ruhepositionstiefe auf die Nutzungspositionstiefe ergreifen muss.

Ferner kann der Getriebemechanismus dazu eingerichtet sein, eine Schwenkbewegung des Sitzelements um die Schwenkachse aus seiner Nutzungsposition in seine Ruheposition in eine Deaktivierung des Vergrößerungsmechanismus umzusetzen. Dadurch wird erreicht, dass die Sitzflächentiefe des Sitzelements automatisch von der Nutzungspositionstiefe wieder auf die Ruhepositionstiefe verringert wird, sobald ein Benutzer des Passagiersitzes von dem Passagiersitz aufsteht.

Der Vergrößerungsmechanismus des Passagiersitzes umfasst vorzugsweise ein einen ersten Abschnitt des Sitzelements bildendes Verlängerungselement, das zwischen einer Ruheposition und einer Nutzungsposition verstellbar ist. Wenn sich das Verlängerungselement in seiner Ruheposition befindet, ist eine Verlängerungsoberfläche des Verlängerungselements relativ zu einem Sitzflächenabschnitt eines an das Verlängerungselement angrenzenden zweiten Abschnitts des Sitzelements gekrümmt oder geneigt oder parallel zu dem Sitzflächenabschnitt des zweiten Abschnitts des Sitzelements unterhalb oder oberhalb des Sitzflächenabschnitts des zweiten Abschnitts des Sitzelements angeordnet. Wenn sich das Verlängerungselement dagegen in seiner Nutzungsposition befindet, fluchtet die Verlängerungsoberfläche des Verlängerungselements mit dem Sitzflächenabschnitt des zweiten Abschnitts des Sitzelements und bewirkt dadurch eine Erweiterung bzw. Verlängerung des Sitzflächenabschnitts des zweiten Abschnitts des Sitzelements um die Verlängerungsoberfläche des Verlängerungselements. Dadurch erhält die Gesamtsitzfläche des Sitzelements eine für einen Benutzer des Passagiersitzes komfortable Größe. Das Verlängerungselement ist vorzugsweise so relativ zu dem zweiten Abschnitt des Sitzelements angeordnet, dass es die Sitzfläche des Sitzelements im Bereich eines von der Rückenlehne des Passagiersitzes abgewandten vorderen Rands des Sitzelements nach vorne verlängert.

Das Verlängerungselement kann beispielsweise in Form eines an dem zweiten Abschnitt des Sitzelements befestigten FinRay^{®}-Effektbauteils ausgebildet sein. Ein FinRay^{®}-Effektbauteil ist ein bionisches Bauteil, das den sogenannten FinRay^{®}-Effekt zeigt, d. h. sich beim Aufbringen einer Druckkraft auf das Bauteil entgegen der Richtung der Druckkraft wölbt. Ein in Form eines FinRay^{®}-Effektbauteils ausgebildetes Verlängerungselement hat eine relativ zu dem Sitzflächenabschnitt des zweiten Abschnitts des Sitzelements gewölbte Verlängerungsfläche und folglich eine geringere Abmessung in einer Richtung parallel zu dem Sitzflächenabschnitt des zweiten Abschnitts des Sitzelements von der Rückenlehne des Passagiersitzes, solange eine Druckkraft auf das Bauteil wirkt. Fällt die auf das Bauteil wirkende Druckkraft dagegen weg, "streckt" sich das Bauteil, sodass die Verlängerungsfläche des Verlängerungselements für eine effektive Vergrößerung der Tiefe der Sitzfläche des Sitzelements von der Ruhepositionstiefe auf die Nutzungspositionstiefe sorgt.

Alternativ dazu kann das Verlängerungselement auch in Form eines relativ zu dem zweiten Abschnitt des Sitzelements um eine weitere Schwenkachse verschwenkbaren Schwenkelements ausgebildet sein. Die Verlängerungsoberfläche des Verlängerungselements ist dann in der Ruheposition des Verlängerungselements relativ zu dem Sitzflächenabschnitt des zweiten Abschnitts des Sitzelements geneigt, wodurch die Sitzfläche des Sitzelements insgesamt eine geringere Tiefe, d. h. die Ruhepositionstiefe erhält. Wenn sich das in Form eines Schwenkelements ausgebildete Verlängerungselement dagegen in seiner Nutzungsposition befindet, verlängert die mit dem Sitzflächenabschnitt des zweiten Abschnitts des Sitzelements fluchtende Verlängerungsoberfläche des Verlängerungselements die Gesamtsitzfläche des Sitzelements auf die Nutzungspositionstiefe.

Schließlich kann das Verlängerungselement auch in Form eines relativ zu dem zweiten Abschnitt des Sitzelements teleskopartig verschiebbaren Teleskopelements ausgebildet sein. Bei einer derartigen Ausgestaltung des Verlängerungselements ist die Verlängerungsoberfläche des Verlängerungselements in der Ruheposition des Verlängerungselements parallel zu dem Sitzflächenabschnitt des zweiten Abschnitts des Sitzelements unterhalb oder oberhalb des Sitzflächenabschnitts des zweiten Abschnitts des Sitzelements angeordnet, wodurch die Gesamtsitzfläche des Sitzelements auf die Ruhepositionstiefe verkürzt ist. In der Nutzungsposition des Verlängerungselements verlängert die mit dem Sitzflächenabschnitt des zweiten Abschnitts des Sitzelements fluchtende Verlängerungsoberfläche des Verlängerungselements dagegen die Gesamtsitzfläche des Sitzelements wiederum auf die Nutzungspositionstiefe.

Der Getriebemechanismus des Passagiersitzes kann ein Druckelement umfassen, das zwischen einer Aktivierungsposition und einer Deaktivierungsposition bewegbar ist. Wenn sich das Druckelement in seiner Aktivierungsposition befindet, bringt das Druckelement eine Druckkraft auf ein in Form eines FinRay^{®}-Effektbauteils ausgebildetes Verlängerungselement auf, wodurch das Verlängerungselement in seiner Ruheposition gehalten wird. Wenn sich das Druckelement dagegen in seiner Deaktivierungsposition befindet, gibt das Druckelement das in Form eines FinRay^{®}-Effektbauteils ausgebildete Verlängerungselement frei, wodurch eine durch den FinRay^{®}-Effekt induzierte Bewegung des Verlängerungselements in seine Nutzungsposition ermöglicht wird. Das Druckelement kann beispielsweise in Form eines um eine Drehachse drehbaren Stifts ausgebildet sein, der in seiner Aktivierungsposition eine Druckkraft auf eine von der Verlängerungsoberfläche des Verlängerungselements abgewandte Unterseite des Verlängerungselements aufbringt.

Ferner kann der Getriebemechanismus eine Antriebseinrichtung zum Bewegen des Druckelements zwischen seiner Aktivierungsposition und seiner Deaktivierungsposition umfassen. Die Antriebseinrichtung kann beispielsweise ein mit der Schwenkachse drehfest verbundenes erstes Zahnrad umfassen, das sich mit einem mit dem Druckelement drehfest verbundenen zweiten Zahnrad in Eingriff befindet. Ein Verschwenken des Sitzelements zwischen seiner Ruheposition und seiner Nutzungsposition um die Schwenkachse bewirkt dann eine Drehung des ersten Zahnrads und folglich auch eine Drehung des mit dem ersten Zahnrad in Eingriff stehenden zweiten Zahnrads. Falls gewünscht oder erforderlich können das erste und das zweite Zahnrad entsprechend dimensioniert sein, um eine Übersetzung einer vergleichsweise geringen Schwenkbewegung des Sitzelements um die Schwenkachse in eine entsprechend größere Drehbewegung des Druckelements um seine Drehachse zu realisieren.

Alternativ dazu kann die Antriebseinrichtung auch einen mit dem Druckelement verbundenen Seilzug umfassen, der dazu eingerichtet ist, zum Bewegen des Druckelements aus seiner Aktivierungsposition in seine Deaktivierungsposition eine Zugkraft auf das Druckelement aufzubringen. Der Seilzug kann beispielsweise ein Halteelement umfassen, das sich von einer der Trägeroberfläche des Sitzelementträgers zugewandten Unterseite des Sitzelements erstrecken kann. An dem Halteelement kann ein erstes Ende eines Seils befestigt sein, dessen zweites Ende mit dem um eine Drehachse drehbaren Druckelement verbunden sein kann. Ferner kann der Seilzug ein Anlageelement umfassen, mit dem das Seil in Anlage gerät, wenn das Sitzelement um die Schwenkachse aus seiner Ruheposition in seine Nutzungsposition verschwenkt wird. Das Anlageelement kann beispielsweise an dem Sitzelementträger angebracht sein. Durch das Zusammenwirken des Seils mit dem Anlageelement wird in dem Seil eine Zugkraft erzeugt, durch die das Druckelement um seine Drehachse aus seiner Aktivierungsposition in seine Deaktivierungsposition gedreht wird. Bei einer derartigen Ausgestaltung der Antriebseinrichtung ist das Druckelement vorzugsweise in seine Aktivierungsposition vorgespannt, sodass das Druckelement automatisch aus seiner Deaktivierungsposition in seine Aktivierungsposition zurückbewegt wird, sobald der Seilzug keine Zugkraft mehr auf das Druckelement ausübt.

In einer weiteren Ausführungsform kann der Getriebemechanismus einen Betätigungshebel umfassen, der zwischen einer Aktivierungsposition und einer Deaktivierungsposition bewegbar ist. Der Betätigungshebel des Getriebemechanismus ist vorzugsweise derart mit einem Verlängerungselement, das in Form eines um eine weitere Schwenkachse verschwenkbaren Schwenkelements ausgebildet ist, verbunden, dass eine Bewegung des Betätigungshebels aus seiner Deaktivierungsposition in seine Aktivierungsposition in eine Schwenkbewegung des Verlängerungselements um die weitere Schwenkachse umgesetzt wird, um das Verlängerungselement aus seiner Ruheposition in seine Nutzungsposition zu verschwenken. In seiner Aktivierungsposition kann der Betätigungshebel eine Kraft auf das Verlängerungselement, aufbringen, die geeignet ist, d. h. entsprechend dimensioniert und gerichtet ist, um das Verlängerungselement in seiner Nutzungsposition zu halten. Die von dem Betätigungshebel auf das Verlängerungselement aufgebrachte Kraft kann beispielsweise eine auf eine Unterseite des Verlängerungselements aufgebrachte Druckkraft sein.

Wenn der Betätigungshebel in seiner Deaktivierungsposition angeordnet ist/wird, wird dagegen ein Verschwenken des Verlängerungselements in seine Ruheposition ermöglicht oder induziert. Beispielsweise kann der in seiner Deaktivierungsposition angeordnete Betätigungshebel das Verlängerungselement freigeben, so dass sich ein federnd in seine Ruheposition vorgespanntes Verlängerungselement selbsttätig aus seiner Nutzungsposition in seine Ruheposition zurückbewegen kann. Alternativ dazu kann der Betätigungshebel jedoch auch derart mit dem Verlängerungselement verbunden sein, dass der Betätigungshebel das Verlängerungselement bei einer Bewegung aus seiner Aktivierungsposition in seine Deaktivierungsposition mitnimmt und dadurch ein Verschwenken des Verlängerungselements aus seiner Nutzungsposition in seine Ruheposition induziert.

Der Betätigungshebel kann über ein um eine Drehachse drehbares Kinematikelement derart mit einem an dem Sitzelement befestigten weiteren Hebel verbunden sein, dass eine Schwenkbewegung des Sitzelements um die Schwenkachse über den weiteren Hebel und das Kinematikelement an den Betätigungshebel übertragen wird, um den Betätigungshebel zwischen seiner Aktivierungsposition und seiner Deaktivierungsposition zu bewegen. Der weitere Hebel kann beispielsweise an einem ersten Ende starr an der der Trägeroberfläche des Sitzelementträgers zugewandten Unterseite des Sitzelements befestigt sein. An einem zweiten Ende kann der weitere Hebel dagegen drehbar mit dem Kinematikelement verbunden sein, so dass der weitere Hebel eine Schwenkbewegung des Sitzelements um die Schwenkachse in eine Drehbewegung des Kinematikelements um die Drehachse umsetzt. Diese Drehbewegung kann ihrerseits an den Betätigungshebel übertragen werden, der mit einem ersten Ende mit dem Kinematikelement und mit einem zweiten Ende mit dem Verlängerungselement verbunden sein kann. Insbesondere kann das zweite Ende des Betätigungshebels im Bereich einer Unterseite des Verlängerungselements, die der Trägeroberfläche des Sitzelementträgers zugewandt ist, wenn sich das Verlängerungselement zur Vergrößerung der Sitzfläche des Sitzelements in seiner Nutzungsposition befindet, mit dem Verlängerungselement verbunden sein.

In noch einer weiteren Ausführungsform kann der Getriebemechanismus eine Hebelanordnung umfassen, die zwischen einer Aktivierungsposition und einer Deaktivierungsposition bewegbar ist. Die Hebelanordnung des Getriebemechanismus ist vorzugsweise derart mit einem Verlängerungselement, das in Form eines relativ zu dem zweiten Abschnitt des Sitzelements teleskopartig verschiebbaren Teleskopelements ausgebildet ist, verbunden, dass eine Bewegung der Hebelanordnung aus ihrer Deaktivierungsposition in ihre Aktivierungsposition in eine teleskopartig Verschiebung des Verlängerungselements relativ zu dem zweiten Abschnitt des Sitzelements umgesetzt wird, um das Verlängerungselement aus seiner Ruheposition in seine Nutzungsposition zu verschieben. In ihrer Aktivierungsposition kann die Hebelanordnung eine Kraft auf das Verlängerungselement, aufbringen, die geeignet ist, d. h. entsprechend dimensioniert und gerichtet ist, um das Verlängerungselement in seiner Nutzungsposition zu halten. Die von der Hebelanordnung auf das Verlängerungselement aufgebrachte Kraft kann beispielsweise eine auf eine dem zweiten Abschnitt des Sitzelements zugewandte Betätigungsfläche des Verlängerungselements aufgebrachte Druckkraft sein.

Wenn die Hebelanordnung in ihrer Deaktivierungsposition angeordnet ist/wird, wird dagegen eine Verschiebung des Verlängerungselements in seine Ruheposition ermöglicht oder induziert. Beispielsweise kann die in ihrer Deaktivierungsposition angeordnete Hebelanordnung das Verlängerungselement freigeben, so dass sich ein federnd in seine Ruheposition vorgespanntes Verlängerungselement selbsttätig aus seiner Nutzungsposition in seine Ruheposition zurückbewegen kann. Alternativ dazu kann die Hebelanordnung jedoch auch derart mit dem Verlängerungselement verbunden sein, dass die Hebelanordnung das Verlängerungselement bei einer Bewegung aus ihrer Aktivierungsposition in ihre Deaktivierungsposition mitnimmt und dadurch eine Verschiebung des Verlängerungselements aus seiner Nutzungsposition in seine Ruheposition induziert.

Der Getriebemechanismus kann ferner eine Antriebseinrichtung zum Bewegen der Hebelanordnung zwischen ihrer Aktivierungsposition und ihrer Deaktivierungsposition umfassen. Die Antriebseinrichtung kann beispielsweise einen mit der Hebelanordnung verbundenen Seilzug umfassen, der dazu eingerichtet ist, zum Bewegen der Hebelanordnung aus ihrer Deaktivierungsposition in ihre Aktivierungsposition eine Zugkraft auf die Hebelanordnung aufzubringen. Der Seilzug kann beispielsweise ein Halteelement umfassen, das an der Rückenlehne des Passagiersitzes, beispielsweise einer Seitenfläche der Rückenlehne befestigt sein kann. An dem Halteelement kann ein erstes Ende eines Seils befestigt sein, dessen zweites Ende mit der Hebelanordnung verbunden sein kann. Ferner kann der Seilzug ein Anlageelement umfassen, mit dem das Seil in Anlage gerät, wenn das Sitzelement um die Schwenkachse aus seiner Ruheposition in seine Nutzungsposition verschwenkt wird. Das Anlageelement kann beispielsweise im Bereich eines der Rückenlehne zugewandten Rands an dem zweiten Abschnitt des Sitzelements angebracht sein. Durch das Zusammenwirken des Seils mit dem Anlageelement wird in dem Seil eine Zugkraft erzeugt, durch die die Hebelanordnung aus ihrer Deaktivierungsposition in ihrer Aktivierungsposition bewegt wird. Bei einer derartigen Ausgestaltung der Antriebseinrichtung ist die Hebelanordnung vorzugsweise in ihre Deaktivierungsposition vorgespannt, sodass die Hebelanordnung automatisch aus ihrer Aktivierungsposition in ihre Deaktivierungsposition zurückbewegt wird, sobald der Seilzug keine Zugkraft mehr auf die Hebelanordnung ausübt.

Die Hebelanordnung kann mindestens einen Hebel mit einem ersten und einem zweiten Ende umfassen. Das erste Ende des Hebels ist vorzugsweise mit dem Seilzug verbunden, während das zweite Ende des Hebels vorzugsweise mit der Betätigungsfläche des Verlängerungselements verbunden ist. Beispielsweise kann das zweite Ende des Hebels an einer Betätigungsfläche des Verlängerungselements anliegen, die durch eine dem zweiten Abschnitt des Sitzelements zugewandte Fläche des Verlängerungselements gebildet wird. In einer bevorzugten Ausführungsform umfasst die Hebelanordnung zwei Hebel, die sich in der Deaktivierungsposition der Hebelanordnung in im Wesentlichen entgegengesetzte Richtungen von dem Seilzug erstrecken. Durch die Ausgestaltung der Hebelanordnung mit zwei Hebeln erfolgt die Kraftübertragung von der Hebelanordnung an das Verlängerungselement, d. h. die Betätigungsfläche des Verlängerungselements an zwei Punkten, wodurch eine gleichmäßige Bewegung des Verlängerungselements zwischen seiner Ruheposition und seiner Nutzungsposition ermöglicht wird.

Der Passagiersitz umfasst vorzugsweise ferner einen Verriegelungsmechanismus, der dazu eingerichtet ist, in einem verriegelten Zustand den Vergrößerungsmechanismus zu deaktivieren. Insbesondere kann der Verriegelungsmechanismus dazu eingerichtet sein, in einem verriegelten Zustand eine Schwenkbewegung des Sitzelements um die Schwenkachse zu unterbinden. Durch die Ausstattung des Passagiersitzes mit einem Verriegelungsmechanismus kann eine unbeabsichtigte Betätigung des Vergrößerungsmechanismus und insbesondere eine unbeabsichtigte Schwenkbewegung des Sitzelements um die Schwenkachse verhindert werden. Der Verriegelungsmechanismus kann beispielsweise einen Bolzen umfassen, der im verriegelten Zustand des Verriegelungsmechanismus mit dem Sitzelementträger und dem zweiten Abschnitt des Sitzelements in Eingriff steht, um eine Schwenkbewegung des Sitzelements um die Schwenkachse zu unterbinden. Ferner kann der Verriegelungsmechanismus einen Betätigungsknopf umfassen, der beispielsweise an dem zweiten Abschnitt des Sitzelements oder dem Sitzelementträger angebracht sein kann und der von einem Benutzer manuell betätigt werden kann, um den Verriegelungsmechanismus zu entriegeln.

In einer besonders bevorzugten Ausführungsform ist der Verriegelungsmechanismus in seinen verriegelten Zustand vorgespannt und dazu eingerichtet, den Vergrößerungsmechanismus automatisch zu deaktivieren, sobald der Vergrößerungsmechanismus nach einer Aktivierung wieder deaktiviert wurde. Insbesondere kann der Verriegelungsmechanismus derart in seinen verriegelten Zustand vorgespannt sein, dass der Verriegelungsmechanismus eine Schwenkbewegung des Sitzelements um die Schwenkachse automatisch unterbindet, sobald das Sitzelement ausgehend von seiner Nutzungsposition wieder seine Ruheposition erreicht hat. Durch eine derartige Ausgestaltung des Verriegelungsmechanismus wird eine aktive Betätigung des Verriegelungsmechanismus nach einer Deaktivierung des Vergrößerungsmechanismus bzw. einem Verschwenken des Sitzelements in seine Ruheposition unnötig.

Schließlich kann der Passagiersitz ein auf der Sitzfläche des Sitzelements angeordnetes Sitzpolster umfassen. Das Sitzpolster ist vorzugsweise elastisch verformbar, d. h. beispielsweise aus einem elastisch verformbaren Stoff oder einem anderen geeigneten elastisch verformbaren Material ausgebildet, um sicherzustellen, dass das Sitzpolster bei einer Aktivierung des Vergrößerungsmechanismus und einer daraus resultierenden Vergrößerung der Tiefe der für den Benutzer nutzbaren Sitzfläche des Sitzelements von der Ruhepositionstiefe in die Nutzungspositionstiefe nicht beschädigt wird.

Ein Passagierkabinenbereich umfasst einen Hauptgang, der sich im Wesentlichen parallel zu einer Längsachse des Passagierkabinenbereichs erstreckt. Ferner umfasst der Passagierkabinenbereich einen Ausgang sowie einen von dem Hauptgang abzweigenden Quergang. Mindestens ein oben beschriebener Passagiersitz ist in dem Passagierkabinenbereich derart angrenzend an den Quergang angeordnet, dass das Sitzelement des Passagiersitzes dem Quergang zugewandt ist. In einem derartigen Passagierkabinenbereich kann der Quergang verbreitert werden, indem der Vergrö-ßerungsmechanismus deaktiviert wird, so dass die Tiefe der für den Benutzer nutzbaren Sitzfläche des Sitzelements des Passagiersitzes lediglich der Ruhepositionstiefe entspricht.

Bei dem Quergang kann es sich um einen zwischen hintereinander angeordneten Passagiersitzreihen verlaufenden Quergang handeln. Der Passagiersitz kann dann beispielsweise in vorteilhafter Weise als benachbart zu dem Hauptgang platzierter "Gangsitz" in dem Passagierkabinenbereich installiert sein, um den Zugang zu seitlich von dem Passagiersitz als "Mittelsitz" und/oder "Fenstersitz" installierten Passagiersitzen über den Quergang zu erleichtern. In einer besonders bevorzugten Ausführungsform des Passagierkabinenbereichs verbindet der Quergang den Hauptgang mit einem Ausgang, insbesondere einem Notausgang des Passagierkabinenbereichs.

Der oben beschriebene Passagiersitz und/oder der oben beschriebene Passagierkabinenbereich ist/sind insbesondere zur Verwendung in einem Flugzeug geeignet. Bei dem Passagierkabinenbereich kann es sich insbesondere um einen Flugzeugpassagierkabinenbereich mit einem Quergang handeln, der den Hauptgang mit einem sich oberhalb eines Flügels befindlichen Notausgang verbindet und bei dem eine vorgegebene Quergangbreite von 33.02 cm (13 Zoll) 13 Zoll zu gewährleisten ist.

Bevorzugte Ausführungsformen der Erfindung werden nun anhand der beigefügten schematischen Zeichnungen näher erläutert, von denen
- Figur 1: einen Passagierkabinenbereich zeigt, in dem eine Mehrzahl von Passagiersitzen angeordnet ist,
- Figur 2: eine Seitenansicht eines zur Installation in dem Passagierkabinenbereich gemäß Figur 1 geeigneten Passagiersitzes mit einem in einer Ruheposition angeordneten Sitzelement und deaktiviertem Vergrößerungsmechanismus zeigt,
- Figur 3: eine Seitenansicht des Passagiersitzes gemäß Figur 2 mit einem in einer Nutzungsposition angeordneten Sitzelement und aktiviertem Vergrößerungsmechanismus zeigt,
- Figur 4: eine Seitenansicht eines zur Installation in dem Passagierkabinenbereich gemäß Figur 1 geeigneten weiteren Passagiersitzes mit einem in einer Ruheposition angeordneten Sitzelement und deaktiviertem Vergrößerungsmechanismus zeigt,
- Figur 5: eine Seitenansicht des Passagiersitzes gemäß Figur 4 mit einem in einer Nutzungsposition angeordneten Sitzelement und aktiviertem Vergrößerungsmechanismus zeigt,
- Figur 6: eine Seitenansicht eines zur Installation in dem Passagierkabinenbereich gemäß Figur 1 geeigneten weiteren Passagiersitzes mit einem in einer Ruheposition angeordneten Sitzelement und deaktiviertem Vergrößerungsmechanismus zeigt,
- Figur 7: eine Seitenansicht des Passagiersitzes gemäß Figur 6 mit einem in einer Nutzungsposition angeordneten Sitzelement und aktiviertem Vergrößerungsmechanismus zeigt,
- Figur 8: eine Seitenansicht eines zur Installation in dem Passagierkabinenbereich gemäß Figur 1 geeigneten weiteren Passagiersitzes mit einem in einer Ruheposition angeordneten Sitzelement und deaktiviertem Vergrößerungsmechanismus zeigt,
- Figur 9: eine Seitenansicht des Passagiersitzes gemäß Figur 8 mit einem in einer Nutzungsposition angeordneten Sitzelement und aktiviertem Vergrößerungsmechanismus zeigt und
- Figur 10: eine Draufsicht des Passagiersitzes gemäß der Figuren 8 und 9 zeigt.

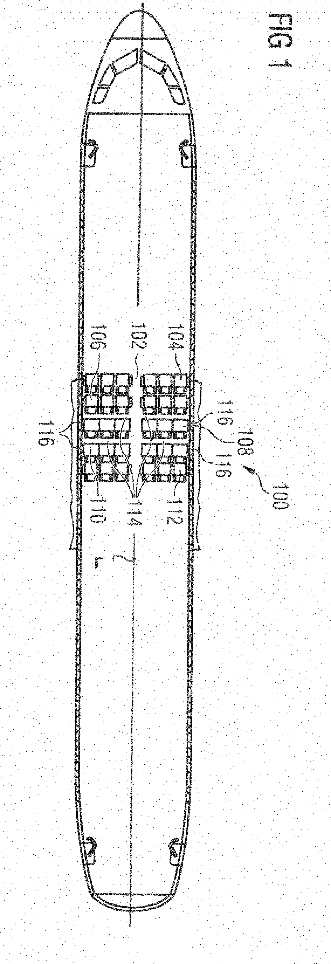

Figur 1 zeigt einen Passagierkabinenbereich 100, der in dem hier gezeigten Ausführungsbeispiel einen Teil einer Flugzeugpassagierkabine bildet. Der Passagierkabinenbereich 100 umfasst einen Hauptgang 102, der sich im Wesentlichen parallel zu einer Längsachse L des Passagierkabinenbereichs 100 erstreckt. In dem Passagierkabinenbereich 100 sind mehrere Passagiersitzreihen 104, 106, 108, 110, 112 installiert. Zwischen den Passagiersitzreihen 106 und 108 und den Passagiersitzreihen 108 und 110 sind jeweils Quergänge 114 vorgesehen, die den Hauptgang 102 mit Notausgängen 116 verbinden. In dem in Figur 1 gezeigten Ausführungsbeispiel eines Flugzeugpassagierkabinenbereichs 100 sind die Notausgänge 116 über den Flügeln des Flugzeugs platziert.

Die Quergänge 114 müssen eine vorgegebene Breite aufweisen, um im Fall einer Notevakuierung der Flugzeugpassagierkabine einen ausreichenden Passagierstrom durch die Quergänge 114 zu den Notausgänge 116 gewährleisten zu können. Bei der Anordnung gemäß Figur 1 ist aus diesem Grund der Abstand zwischen hintereinander angeordneten Passagiersitzen der Passagiersitzreihen 106 und 108 sowie hintereinander angeordneten Passagiersitzen der Passagiersitzreihen 108 und 110 jeweils größer als der Abstand zwischen hintereinander angeordneten Passagiersitzen der Passagiersitzreihen 104 und 106 und hintereinander angeordneten Passagiersitzen der Passagiersitzreihen 110 und 112.

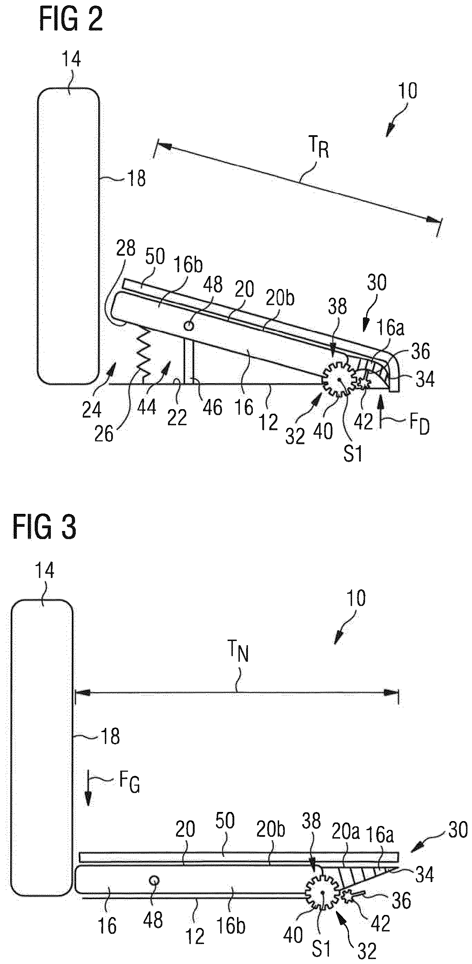

Verschiedene Ausführungsformen eines zur Installation in den Passagiersitzreihen 106 und 108 des in Figur 1 gezeigten Passagierkabinenbereichs 100 geeigneten Passagiersitzes 10 sind in den Figuren 2 bis 10 veranschaulicht. Zusätzlich oder alternativ dazu sind die in den Figuren 2 bis 10 gezeigten Passagiersitze 10 auch zur Installation in den Passagiersitzreihen 104, 110 und 112 als "Gangsitze" benachbart zu dem Hauptgang 102 und/oder als "Mittelsitze" geeignet, um, wie nachfolgend noch näher erläutert wird, den Zugang zu den "Fenstersitzen" zu erleichtern.

In einer in den Figuren 2 und 3 gezeigten Ausführungsform umfasst der Passagiersitz 10 einen Sitzelementträger 12, der an einer in den Figuren nicht gezeigten Unterkonstruktion befestigbar ist. Die Unterkonstruktion ist ihrerseits in einer Sitzschiene (ebenfalls nicht gezeigt) befestigbar, die in einen Boden des Passagierkabinenbereichs 100 integriert sein kann. Ferner umfasst der Passagiersitz 10 eine Rückenlehne 14 sowie ein Sitzelement 16. Die Rückenlehne 14 ist relativ zu dem Sitzelement 16 zwischen einer aufrechten Position und einer zurückgelehnten Position verschwenkbar. Wenn sich die Rückenlehne 14 in ihrer aufrechten Position befindet, erstreckt sich eine Rückenlehnenfläche 18 der Rückenlehne 14 im Wesentlichen senkrecht zu einer Sitzfläche 20 des Sitzelements 16. Im Gegensatz dazu bildet die Rückenlehnenfläche 18 der Rückenlehne 14 mit der Sitzfläche 20 des Sitzelements 16 einen Winkel größer 90°, wenn sich die Rückenlehne 14 in ihrer zurückgelehnten Position befindet. Falls gewünscht, kann die Rückenlehne 14 jedoch auch starr, d.h. nicht relativ zu dem Sitzelement 16 verschwenkbar ausgeführt sein.

Wie aus einem Vergleich der Figuren 2 und 3 deutlich wird, ist das Sitzelement 16 des Passagiersitzes 10 um eine Schwenkachse S1 relativ zu dem Sitzelementträger 12 zwischen einer in Figur 2 veranschaulichten Ruheposition und einer in Figur 3 gezeigten Nutzungsposition verschwenkbar an dem Sitzelementträger 12 befestigt. Die Schwenkachse S1 ist im Bereich eines von der Rückenlehne 14 abgewandten vorderen Rands des Sitzelementträgers 12 angeordnet, so dass ein der Rückenlehne 14 zugewandter hinterer Rand des Sitzelements 16 frei relativ zu dem Sitzelementträger 12 und der Rückenlehne 14 verschwenkbar ist. Wenn sich das Sitzelement 16 in seiner Ruheposition befindet, steigt die Sitzfläche 20 des Sitzelements 16 ausgehend von dem vorderen Rand des Sitzelementträgers 12 in Richtung der Rückenlehne 14 nach oben an, d. h. bildet betrachtet von der Rückenlehne 14 aus eine nach vorne abschüssige Fläche. Dabei bildet die Sitzfläche 20 des Sitzelements 16 mit einer dem Sitzelement 16 zugewandten Trägeroberfläche 22 des Sitzelementträgers 12 in den in den Figuren gezeigten Varianten eines Passagiersitzes 10 einen Winkel α von ca. 15°. Wenn sich das Sitzelement 16, wie in Figur 3 gezeigt, in seiner Nutzungsposition befindet, erstreckt sich die Sitzfläche 20 des Sitzelements 16 dagegen im Wesentlichen parallel zu der dem Sitzelement 16 zugewandten Trägeroberfläche 22 des Sitzelementträgers 12.

Der Passagiersitz 10 ist mit einem Vorspannmechanismus 24 ausgestattet, der dazu dient, das Sitzelement 16 in seine in Figur 2 gezeigte Ruheposition vorzuspannen. Der Vorspannmechanismus 24 umfasst ein Federelement 26 mit einem ersten Ende sowie einem zweiten Ende. Das erste Ende des Federelements 26 stützt sich an der Trägeroberfläche 22 des Sitzelementträgers 12 ab, während sich das zweite Ende des Federelements 26 an einer der Trägeroberfläche 22 des Sitzelementträgers 12 zugewandten Unterseite 28 des Sitzelements 16 abstützt. Das Federelement 26 ist so dimensioniert, dass die von dem Federelement 26 aufgebrachte Vorspannkraft geringer ist als eine Gewichtskraft F_{G}, die ein Benutzer des Passagiersitzes 10 auf das Sitzelement 16, d. h. die Sitzfläche 20 des Sitzelements 16 aufbringt, wenn er auf dem Passagiersitz 10 Platz nimmt bzw. auf dem Passagiersitz 10 sitzt. Die von dem Vorspannmechanismus 24 bzw. dem Federelement 26 aufgebrachte Vorspannkraft ist jedoch ausreichend groß, um sicherzustellen, dass das Sitzelement 16 automatisch aus seiner in Figur 3 veranschaulichten Nutzungsposition in seine in Figur 2 gezeigte Ruheposition zurückbewegt wird, sobald der Benutzer von dem Passagiersitz 10 aufsteht, d. h. die auf die Sitzfläche 20 des Sitzelements 16 wirkende Gewichtskraft F_{G} wegfällt.

Ferner umfasst der Passagiersitz 10 einen Vergrößerungsmechanismus 30, der dazu eingerichtet ist, die Gewichtskraft F_{G}, die auf das Sitzelement wirkt, wenn ein Benutzer auf dem Passagiersitz 10 sitzt, in eine Vergrößerung einer Tiefe der für den Benutzer nutzbaren Sitzfläche 20 des Sitzelements 16 von einer Ruhepositionstiefe T_{R} in eine Nutzungspositionstiefe T_{N} umzusetzen. Wenn der Passagiersitz 10, wie in Figur 2 gezeigt, nicht in Benutzung ist und keine Gewichtskraft F_{G} auf das Sitzelement 16 wirkt, hat das Sitzelement 16 die Ruhepositionstiefe T_{R}. Wenn der Passagiersitz 10 dagegen benutzt wird und ein auf dem Sitzelement 16 sitzender Benutzer eine Gewichtskraft F_{G} auf das Sitzelement 16 aufbringt, sorgt der Vergrößerungsmechanismus 30 für eine Vergrößerung der Tiefe der Sitzfläche 20 auf die Nutzungspositionstiefe T_{N}. Wie im Folgenden noch näher erörtert werden wird, ist der Vergrößerungsmechanismus 30 ferner dazu eingerichtet, einen Wegfall der auf das Sitzelement 16 wirkenden Gewichtskraft F_{G} in eine Verringerung der Tiefe der für den Benutzer nutzbaren Sitzfläche 20 des Sitzelements 16 von der Nutzungspositionstiefe T_{N} in die Ruhepositionstiefe T_{R} umzusetzen.

Der Passagiersitz 10 ist ferner mit einem Getriebemechanismus 32 ausgestattet, der dazu eingerichtet ist, eine Schwenkbewegung des Sitzelements 16 um die Schwenkachse S1 in einer Aktivierung bzw. Deaktivierung des Vergrößerungsmechanismus 30 umzusetzen. Insbesondere ist der Getriebemechanismus 32 dazu eingerichtet, eine Schwenkbewegung des Sitzelements 16 um die Schwenkachse S1 aus seiner in Figur 2 gezeigten Ruheposition in seine in Figur 3 veranschaulichte Nutzungsposition in eine Aktivierung des Vergrößerungsmechanismus 30 umzusetzen. Ferner ist der Getriebemechanismus 32 dazu eingerichtet, eine Schwenkbewegung des Sitzelements 16 um die Schwenkachse S1 aus seiner in Figur 3 gezeigten Nutzungsposition in seine in Figur 2 veranschaulichte Ruheposition in eine Deaktivierung des Vergrößerungsmechanismus 30 umzusetzen.

Der Vergrößerungsmechanismus 30 umfasst ein Verlängerungselement 34, das einen ersten Abschnitt 16a des Sitzelements 16 bildet. Das Verlängerungselement 34 ist zwischen einer in Figur 2 gezeigten Ruheposition und einer in Figur 3 veranschaulichten Nutzungsposition verstellbar. Wenn sich das Verlängerungselement 34 in seiner Ruheposition befindet, ist eine Verlängerungsoberfläche 20a des Verlängerungselements 34 relativ zu einem Sitzflächenabschnitt 20b eines an das Verlängerungselement 34 angrenzenden zweiten Abschnitts 16b des Sitzelements 16 gekrümmt. Wenn sich das Verlängerungselement 34 dagegen in seiner Nutzungsposition befindet, fluchtet die Verlängerungsoberfläche 20a des Verlängerungselements 34 mit dem Sitzflächenabschnitt 20b des zweiten Abschnitts 16b des Sitzelements 16 und bewirkt dadurch im Bereich eines von der Rückenlehne 14 des Passagiersitzes 10 abgewandten vorderen Rands des Sitzelements 16 eine Erweiterung bzw. Verlängerung des Sitzflächenabschnitts 20b des zweiten Abschnitts 16b des Sitzelements 16 um die Verlängerungsoberfläche 20a des Verlängerungselements 34.

Bei der in den Figuren 2 und 3 gezeigten Variante des Passagiersitzes 10 ist das Verlängerungselement 34 in Form eines an dem zweiten Abschnitt 16b des Sitzelements 16 befestigten FinRay^{®}-Effektbauteils ausgebildet und hat eine relativ zu dem Sitzflächenabschnitt 20b des zweiten Abschnitts 16b des Sitzelements 16 in Richtung des Sitzelementträgers 12 gewölbte Verlängerungsfläche 20a, solange eine Drucckraft F_{D} auf das Bauteil wirkt. Fällt die auf das Bauteil wirkende Druckkraft F_{D} dagegen weg, "streckt" sich das Bauteil, sodass die Verlängerungsfläche 20a des Verlängerungselements 34 für eine effektive Vergrößerung der Tiefe der Sitzfläche 20 des Sitzelements 16 von der Ruhepositionstiefe T_{R} auf die Nutzungspositionstiefe T_{N} sorgt.

Zur Aktivierung bzw. Deaktivierung des in Form eines FinRay^{®}-Effektbauteils ausgebildeten Verlängerungselements 34 umfasst der Getriebemechanismus 32 bei der in den Figuren 2 und 3 gezeigten Ausführungsform des Passagiersitzes 10 ein Druckelement 36, das zwischen einer in Figur 2 gezeigten Aktivierungsposition und einer in Figur 3 veranschaulichten Deaktivierungsposition bewegbar ist. Insbesondere ist das Druckelement 36 in Form eines um eine Drehachse drehbaren Stifts ausgebildet, der in seiner Aktivierungsposition eine Druckkraft F_{D} auf eine von der Verlängerungsoberfläche 20a des Verlängerungselements 34 abgewandte Unterseite des Verlängerungselements 34 aufbringt.

Darüber hinaus umfasst der Getriebemechanismus 32 eine Antriebseinrichtung 38 zum Bewegen des Druckelements 36 zwischen seiner Aktivierungsposition und seiner Deaktivierungsposition. Die Antriebseinrichtung 38 umfasst ein mit der Schwenkachse S1 drehfest verbundenes erstes Zahnrad 40, das sich mit einem mit dem Druckelement 36 drehfest verbundenen zweiten Zahnrad 42 in Eingriff befindet. Ein Verschwenken des Sitzelements 16 aus seiner in Figur 2 veranschaulichten Ruheposition in seine in Figur 3 gezeigte Nutzungsposition um die Schwenkachse S1 bewirkt eine Drehung des ersten Zahnrads 40 im Gegenuhrzeigersinn und folglich eine Drehung des mit dem ersten Zahnrad 40 in Eingriff stehenden zweiten Zahnrads 42 im Uhrzeigersinn. Entsprechend bewirkt ein Verschwenken des Sitzelements 16 aus seiner in Figur 3 gezeigten Nutzungsposition in seine in Figur 2 veranschaulichte Ruheposition um die Schwenkachse S1 eine Drehung des ersten Zahnrad 40 im Uhrzeigersinn und folglich eine Drehung des mit dem ersten Zahnrad 40 in Eingriff stehenden zweiten Zahnrad 42 im Uhrzeigersinn. Das erste Zahnrad 40 derart größer als das zweite Zahnrad 42 dimensioniert, dass eine Übersetzung der vergleichsweise geringen Schwenkbewegung des Sitzelements 16 um die Schwenkachse S1 in eine entsprechend größere Drehbewegung des Druckelements 36 um seine Drehachse realisiert werden kann.

Der Passagiersitz 10 umfasst ferner einen Verriegelungsmechanismus 44, der dazu eingerichtet ist, in einem verriegelten Zustand eine Schwenkbewegung des Sitzelements 16 um die Schwenkachse S1 zu unterbinden dadurch den Vergrößerungsmechanismus 30 zu deaktivieren. Der Verriegelungsmechanismus 44 umfasst einen Bolzen 46, der im verriegelten Zustand des Verriegelungsmechanismus 44 mit dem Sitzelementträger 12 und dem zweiten Abschnitt 16b des Sitzelements 16 in Eingriff steht, um eine Schwenkbewegung des Sitzelements 16 um die Schwenkachse S1 zu unterbinden. Ferner umfasst der Verriegelungsmechanismus 44 einen Betätigungsknopf 48, der an dem zweiten Abschnitt 16b des Sitzelements 16 angebracht ist und der von einem Benutzer manuell betätigt werden kann, um den Bolzen 46 aus seiner Verriegelungsposition zu lösen und dadurch den Verriegelungsmechanismus 44 zu entriegeln. Der Verriegelungsmechanismus 44 ist in seinen verriegelten Zustand vorgespannt, so dass er eine Schwenkbewegung des Sitzelements 16 um die Schwenkachse S1 automatisch unterbindet, sobald das Sitzelement 16 ausgehend von seiner Nutzungsposition wieder seine Ruheposition erreicht hat.

Schließlich umfasst der Passagiersitz 10 ein auf der Sitzfläche 20 des Sitzelements 16 angeordnetes Sitzpolster 50. Das Sitzpolster 50 ist elastisch verformbar, d. h. aus einem elastisch verformbaren Stoff oder einem anderen geeigneten elastisch verformbaren Material ausgebildet, um sicherzustellen, dass das Sitzpolster 50 bei einer Aktivierung des Vergrößerungsmechanismus 30 und einer daraus resultierenden Vergrößerung der Tiefe der für den Benutzer nutzbaren Sitzfläche 20 des Sitzelements 16 von der Ruhepositionstiefe in die Nutzungspositionstiefe nicht beschädigt wird.

Im Folgenden wird die Funktion der in den Figuren 2 und 3 gezeigten Ausführungsform des Passagiersitzes 10 erläutert. Wenn der Passagiersitz 10, wie in Figur 2 gezeigt, nicht in Benutzung ist und keine Gewichtskraft F_{G} auf das Sitzelement 16 wirkt, befindet sich das Sitzelement 16 in seiner Ruheposition, in der die Sitzfläche 20 des Sitzelements 16 relativ zu der Trägeroberfläche 22 des Sitzelementträgers 12 geneigt ist. Darüber hinaus sorgt die Interaktion des Druckelements 36 mit dem Verlängerungselement 34 des Vergrößerungsmechanismus 30 dafür, dass der Vergrößerungsmechanismus 30 deaktiviert ist und das Sitzelement 16 folglich lediglich seine Ruhepositionstiefe T_{R} hat. Dementsprechend hat das Sitzelement 16 in einer Richtung senkrecht zu der Rückenlehnenfläche 18 der Rückenlehne 14 nach vorne einen geringen Platzbedarf, wodurch im unbenutzten Zustand des Passagiersitzes 10 der Abstand zwischen dem vorderen Rand des Sitzelements 16 und einem vor dem Passagiersitz 10 befindlichen Vordersitz vergrößert werden kann. Durch den Verriegelungsmechanismus 44 wird das Sitzelement 16 in seiner Ruheposition verriegelt, wodurch eine unbeabsichtigte Überführung des Sitzelements 16 aus seiner Ruheposition in seine Nutzungsposition und eine daraus resultierende Aktivierung des Vergrö-ßerungsmechanismus 30 sicher unterbunden wird.

Wenn ein Benutzer auf dem Passagiersitz 10 Platz nehmen möchte, drückt er zunächst den Betätigungsknopf 48 des Verriegelungsmechanismus 44, um den Verriegelungsmechanismus 44 zu entriegeln. Anschließend überwindet die von dem Benutzer auf das Sitzelement 16 aufgebrachte Gewichtskraft F_{G} die von dem Federelement 26 des Vorspannmechanismus 24 aufgebrachte Vorspannkraft und bewirkt eine Schwenkbewegung des Sitzelements 16 um die Schwenkachse S1. Dadurch wird die Sitzfläche 20 des Sitzelements 16 im Wesentlichen parallel zu der Trägeroberfläche 22 des Sitzelementträgers ausgerichtet.

Gleichzeitig setzt der Getriebemechanismus 32 die Schwenkbewegung des Sitzelements 16 um die Schwenkachse S1 aus seiner Ruheposition in seine Nutzungsposition in eine Aktivierung des Vergrößerungsmechanismus 30 um. Insbesondere induziert die Schwenkbewegung des Sitzelements 16 um die Schwenkachse S1 aus seiner Ruheposition in seine Nutzungsposition eine Drehung des ersten Zahnrads 40 im Gegenuhrzeigersinn und folglich eine Drehung des zweiten Zahnrad 42 im Uhrzeigersinn, wodurch das Druckelement 36 das Verlängerungselement 34 freigibt. Durch den FinRay^{®}-Effekt bewirkt der Wegfall der Druckkraft F_{D} eine Streckung des Verlängerungselements 34, sodass die Verlängerungsfläche 20a des Verlängerungselements 34 für eine effektive Vergrößerung der Tiefe der Sitzfläche 20 des Sitzelements 16 von der Ruhepositionstiefe T_{R} auf die Nutzungspositionstiefe T_{N}, verbunden mit einer entsprechenden elastischen Dehnung des Sitzpolsters 50, sorgt. Dadurch erhält die Sitzfläche 20 des Sitzelements 16 eine Tiefe, die ein bequemes Sitzen ermöglicht.

Wenn der Benutzer wieder von dem Passagiersitz 10 aufsteht und folglich die Gewichtskraft F_{G} nicht länger auf das Sitzelement 16 wirkt, sorgt der Vorspannmechanismus 24 dafür, dass das Sitzelement 16 automatisch in seine Ruheposition zurückgeschwenkt wird. Die Schwenkbewegung des Sitzelements 16 wird wiederum über den Getriebemechanismus 32 an den Vergrößerungsmechanismus 30 übertragen, d. h. auch der Vergrößerungsmechanismus 30 wird automatisch deaktiviert. Insbesondere bewirkt eine aus der Schwenkbewegung des Sitzelements 16 um die Schwenkachse S1 resultierende Drehung des ersten Zahnrads 40 im Uhrzeigersinn eine Drehung des zweiten Zahnrads 42 im Gegenuhrzeigersinn, wodurch das Druckelement 36 wieder in Anlage an die Unterseite des Verlängerungselements 34 gerät. Infolge des FinRay^{®}-Effekts wölbt sich das Verlängerungselement 34 entgegen der von dem Druckelement 36 aufgebrachten Druckkraft F_{D}, woraus wiederum eine Verringerung der Tiefe der Sitzfläche 20 des Sitzelements 16 auf die Ruhepositionstiefe T_{R} resultiert. Ferner nimmt der Verriegelungsmechanismus 34 aufgrund seiner Vorspannung wieder seine Verriegelungsstellung ein.

Wenn der Passagiersitz 10 in dem Passagierkabinenbereich 100 in den Passagiersitzreihen 106 und 108 angrenzend an die Quergänge 114 so installiert ist, dass das Sitzelement 16 des Passagiersitzes 10 dem jeweiligen Quergang 114 zugewandt ist, kann durch das Verschwenken des Sitzelements 16 aus seiner Nutzungsposition in seine Ruheposition und die gleichzeitige Deaktivierung des Vergrößerungsmechanismus 30 der Abstand zwischen dem vorderen Rand des Sitzelements 16 und einem vor dem Passagiersitz 10 befindlichen weiteren Passagiersitz vergrößert werden. Im Normalbetrieb eines mit dem Passagierkabinenbereich 110 ausgestatteten Flugzeugs kann der Passagiersitz 10 mit in seiner Nutzungsposition angeordnetem Sitzelement 16 in üblicher Weise und ohne Komforteinbußen für einen auf dem Passagiersitz 10 sitzenden Passagier genutzt werden. Wenn dagegen Passagiere durch den Quergang 114 zu dem Ausgang 116 gelangen müssen, kann das Sitzelement 16 in seine Ruheposition verschwenkt und gleichzeitig der Vergrößerungsmechanismus 30 deaktiviert werden, wodurch der Quergang 114 verbreitert werden kann.

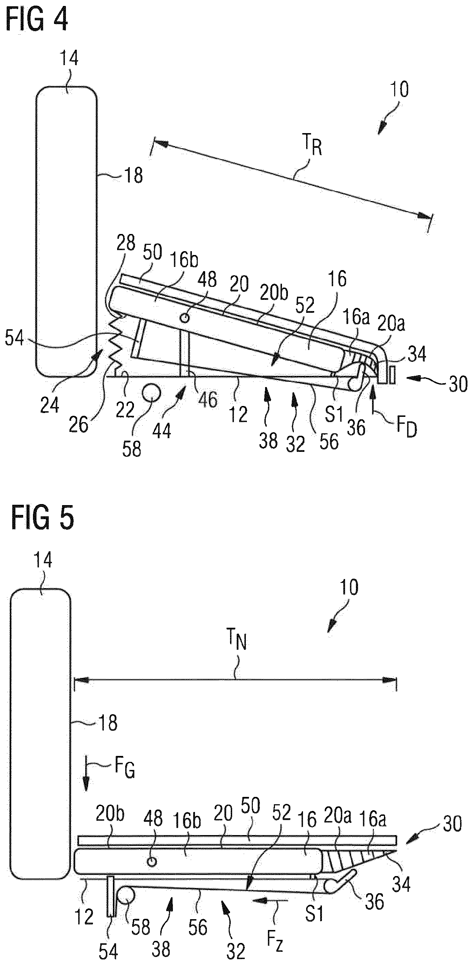

Die in den Figuren 4 und 5 gezeigte Ausführungsform eines Passagiersitzes 10 unterscheidet sich von der Anordnung gemäß den Figuren 2 und 3 lediglich durch die Ausgestaltung der Antriebseinrichtung 38 des Getriebemechanismus 32. Bei dem in den Figuren 4 und 5 veranschaulichten Passagiersitz 10 umfasst die Antriebseinrichtung 38 einen mit dem Druckelement 36 verbundenen Seilzug 52, der dazu eingerichtet ist, zum Bewegen des Druckelements 36 aus seiner in Figur 4 gezeigten Aktivierungsposition in seine in Figur 5 veranschaulichte Deaktivierungsposition eine Zugkraft Fz auf das Druckelement 36 aufzubringen.

Der Seilzug 52 umfasst ein Halteelement 54, das sich von der Unterseite 28 des Sitzelements 16 erstreckt. An dem Halteelement 54 ist ein erstes Ende eines Seils 56 befestigt. Ein zweites Ende des Seils ist dagegen mit dem um eine Drehachse drehbaren Druckelement 36 verbunden. Schließlich umfasst der Seilzug 52 ein an dem Sitzelementträger 12 angebrachtes Anlageelement 58, mit dem das Seil 56 in Anlage gerät, wenn das Sitzelement 16 um die Schwenkachse S1 aus seiner in Figur 4 veranschaulichten Ruheposition in seine in Figur 5 gezeigte Nutzungsposition verschwenkt wird. Durch das Zusammenwirken des Seils 56 mit dem Anlageelement 58 wird in dem Seil 56 die Zugkraft Fz erzeugt, durch die das Druckelement 36 um seine Drehachse aus seiner Aktivierungsposition in seine Deaktivierungsposition gedreht wird. Das Druckelement 36 ist in seine Aktivierungsposition vorgespannt, sodass das Druckelement 36 automatisch aus seiner Deaktivierungsposition in seine Aktivierungsposition zurückbewegt wird, sobald der Seilzug 52 infolge einer Rückbewegung des Sitzelements 16 aus seiner Nutzungsposition in seine Ruheposition keine Zugkraft mehr auf das Druckelement 36 ausübt.

Im Übrigen entsprechen die Struktur und die Funktion des Passagiersitzes 10 gemäß der Figuren 4 und 5 der Struktur der Funktion des in den Figuren 2 und 3 veranschaulichten Passagiersitzes 10.

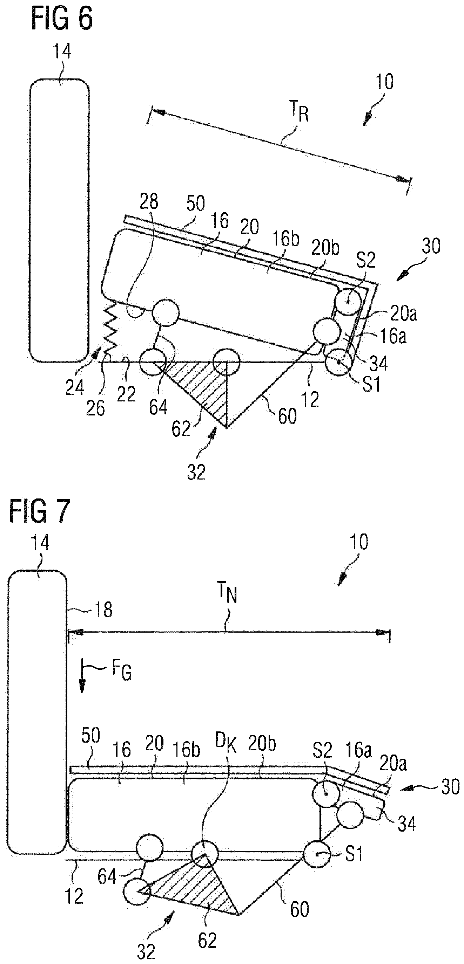

Die in den Figuren 6 und 7 gezeigte Ausführungsform eines Passagiersitzes 10 unterscheidet sich von der Anordnung gemäß den Figuren 2 und 3 zunächst dadurch, dass das Verlängerungselement 34 in Form eines relativ zu dem zweiten Abschnitt 16b um eine weitere Schwenkachse S2 verschwenkbaren Schwenkelements ausgebildet ist. In der Ruheposition des Verlängerungselements 34 ist die Verlängerungsoberfläche 20a des Verlängerungselements 34 relativ zu dem Sitzflächenabschnitt 20b des zweiten Abschnitts 16b des Sitzelements 16 geneigt, wodurch die Sitzfläche 20 des Sitzelements 16 insgesamt eine geringere Tiefe, d. h. die Ruhepositionstiefe T_{R} erhält. Wenn sich das in Form eines Schwenkelements ausgebildete Verlängerungselement 34 dagegen in seiner Nutzungsposition befindet, verlängert die mit dem Sitzflächenabschnitt 20b des zweiten Abschnitts 16b des Sitzelements 16 fluchtende Verlängerungsoberfläche 20a des Verlängerungselements 34 die Gesamtsitzfläche 20 des Sitzelements 16 auf die Nutzungspositionstiefe T_{N}.

Der mit dem in Form eines relativ zu dem zweiten Abschnitt 16b um eine weitere Schwenkachse S2 verschwenkbaren Schwenkelements ausgebildeten Verlängerungselement 34 zusammenwirkende Getriebemechanismus 32 umfasst einen Betätigungshebel 60, der zwischen einer Aktivierungsposition, siehe Figur 6, und einer Deaktivierungsposition, siehe Figur 7, bewegbar ist. Der Betätigungshebel 60 ist derart mit dem Verlängerungselement 34 verbunden, dass eine Bewegung des Betätigungshebels 60 aus seiner Deaktivierungsposition in seine Aktivierungsposition in eine Schwenkbewegung des Verlängerungselements 34 um die weitere Schwenkachse S2 umgesetzt wird, um das Verlängerungselement 34 aus seiner Ruheposition in seine Nutzungsposition zu verschwenken. In seiner Aktivierungsposition bringt der Betätigungshebel 60 eine Druckkraft auf eine Unterseite des Verlängerungselements 34 auf, die das Verlängerungselement 34 in seiner Nutzungsposition hält. Bei einer Bewegung aus seiner in Figur 6 veranschaulichten Aktivierungsposition in seine in Figur 7 gezeigte Deaktivierungsposition nimmt der Betätigungshebel 60 das Verlängerungselement 34 mit und induziert dadurch ein Verschwenken des Verlängerungselements 34 aus seiner Nutzungsposition in seine Ruheposition.

Der Betätigungshebel 60 ist über ein um eine Drehachse D_{K} drehbares Kinematikelement 62 derart mit einem an dem Sitzelement 16 befestigten weiteren Hebel 64 verbunden, dass eine Schwenkbewegung des Sitzelements 16 um die Schwenkachse S1 über den weiteren Hebel 64 und das Kinematikelement 62 an den Betätigungshebel 60 übertragen wird, um den Betätigungshebel 60 zwischen seiner Aktivierungsposition und seiner Deaktivierungsposition zu bewegen. Der weitere Hebel 64 ist an einem ersten Ende starr an der Unterseite 28 des Sitzelements 16 befestigt. An einem zweiten Ende ist der weitere Hebel 64 dagegen drehbar mit dem Kinematikelement 62 verbunden, so dass der weitere Hebel 64 eine Schwenkbewegung des Sitzelements 16 um die Schwenkachse S1 in eine Drehbewegung des Kinematikelements 62 um die Drehachse D_{K} umsetzt. Diese Drehbewegung kann ihrerseits an den Betätigungshebel 60 übertragen werden, der mit einem ersten Ende mit dem Kinematikelement 62 und mit einem zweiten Ende mit dem Verlängerungselement 34 verbunden ist.

Im Übrigen entsprechen die Struktur und die Funktion des Passagiersitzes 10 gemäß der Figuren 6 und 7 der Struktur und der Funktion des in den Figuren 2 und 3 veranschaulichten Passagiersitzes 10.

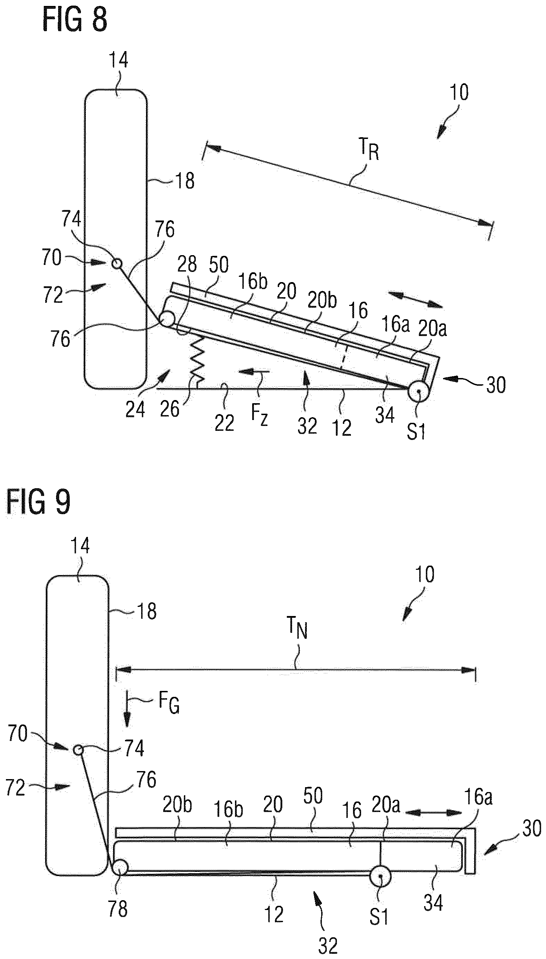

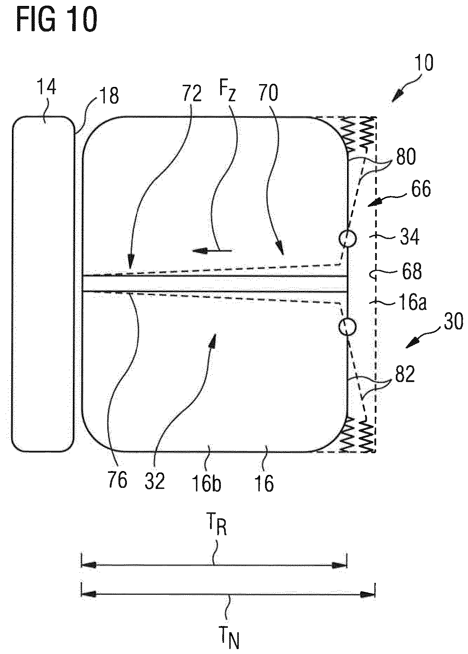

Die in den Figuren 8 bis 10 gezeigte Ausführungsform eines Passagiersitzes 10 unterscheidet sich von der Anordnung gemäß den Figuren 2 und 3 dadurch, dass das Verlängerungselement 34 in Form eines relativ zu dem zweiten Abschnitt 16b des Sitzelements 16 teleskopartig verschiebbaren Teleskopelements ausgebildet ist. In der in Figur 8 gezeigten und in Figur 10 mit durchgezogenen Linien gezeichneten Ruheposition des Verlängerungselements 34 ist die Verlängerungsoberfläche 20a des Verlängerungselements parallel zu dem Sitzflächenabschnitt 20b des zweiten Abschnitts 16b des Sitzelements 16 unterhalb des Sitzflächenabschnitts 20b des zweiten Abschnitts 16b des Sitzelements 16 angeordnet, wodurch die Gesamtsitzfläche 20 des Sitzelements 16 auf die Ruhepositionstiefe T_{R} verkürzt ist. In der in Figur 9 gezeigten und in Figur 10 mit gestrichelten Linien angedeuteten Nutzungsposition des Verlängerungselements 34 verlängert die mit dem Sitzflächenabschnitt 20b des zweiten Abschnitts 16b des Sitzelements 16 fluchtende Verlängerungsoberfläche 20a des Verlängerungselements 34 dagegen die Gesamtsitzfläche 20 des Sitzelements 16 wiederum auf die Nutzungspositionstiefe T_{N}.

Der Getriebemechanismus 32 umfasst eine Hebelanordnung 66, die zwischen einer Aktivierungsposition und einer Deaktivierungsposition bewegbar ist. Die Hebelanordnung 66 ist derart mit dem Verlängerungselement 34 verbunden, dass eine Bewegung der Hebelanordnung 66 aus ihrer Deaktivierungsposition in ihre Aktivierungsposition in eine teleskopartig Verschiebung des Verlängerungselements 34 relativ zu dem zweiten Abschnitt 16b des Sitzelements 16 umgesetzt wird, um das Verlängerungselement 34 aus seiner Ruheposition in seine Nutzungsposition zu verschieben. In ihrer Aktivierungsposition bringt die Hebelanordnung 66 eine Druckkraft auf eine dem zweiten Abschnitt 16b des Sitzelements 16 zugewandte Betätigungsfläche 68 des Verlängerungselements 34 auf, durch die das Verlängerungselement 34 in seiner Nutzungsposition gehalten wird. Wenn die Hebelanordnung 66 aus ihrer Aktivierungsposition in ihre Deaktivierungsposition bewegt wird, nimmt die Hebelanordnung 66 das Verlängerungselement 34 mit, wodurch eine Verschiebung des Verlängerungselements 34 aus seiner Nutzungsposition in seine Ruheposition induziert wird.

Eine Antriebseinrichtung 70 zum Bewegen der Hebelanordnung 66 zwischen ihrer Aktivierungsposition und ihrer Deaktivierungsposition umfasst einen mit der Hebelanordnung 66 verbundenen Seilzug 72, der zum Bewegen der Hebelanordnung 66 aus ihrer Deaktivierungsposition in ihre Aktivierungsposition eine Zugkraft Fz auf die Hebelanordnung 66 aufbringt. Der Seilzug 72 umfasst ein Halteelement 74, das an einer Seitenfläche der Rückenlehne 14 befestigt ist. An dem Halteelement 74 ist ein erstes Ende eines Seils 76 befestigt, dessen zweites Ende mit der Hebelanordnung 66 verbunden ist. Ferner umfasst der Seilzug 72 ein Anlageelement 78, mit dem das Seil 76 in Anlage gerät, wenn das Sitzelement 16 um die Schwenkachse S1 aus seiner Ruheposition in seine Nutzungsposition verschwenkt wird. Das Anlageelement 78 ist im Bereich eines der Rückenlehne 14 zugewandten Rands an dem zweiten Abschnitt 16b des Sitzelements 16 angebracht. Durch das Zusammenwirken des Seils 76 mit dem Anlageelement 78 wird in dem Seil 76 eine Zugkraft Fz erzeugt, durch die die Hebelanordnung 66 aus ihrer Deaktivierungsposition in ihrer Aktivierungsposition bewegt wird. Die Hebelanordnung 66 ist in ihre Deaktivierungsposition vorgespannt, sodass die Hebelanordnung 66 automatisch aus ihrer Aktivierungsposition in ihre Deaktivierungsposition zurückbewegt wird, sobald der Seilzug 72 keine Zugkraft Fz mehr auf die Hebelanordnung 66 ausübt.

In der in den Figuren 8 bis 10 gezeigten Anordnung umfasst die Hebelanordnung 66 zwei Hebel 80, 82 mit jeweils einem ersten und einem zweiten Ende. Das erste Ende eines jeden Hebels 80, 82 ist mit dem Seilzug 72 verbunden, während das zweite Ende der Hebel 80, 82 mit der Betätigungsfläche 68 des Verlängerungselements 34 verbunden ist. Insbesondere liegt das zweite Ende der Hebel 80, 82 an der Betätigungsfläche 68 des Verlängerungselements 34 an. In der Deaktivierungsposition der Hebelanordnung 66 erstrecken sich die beiden Hebel 80, 82 in im Wesentlichen entgegengesetzte Richtungen von dem Seilzug 72. In der Aktivierungsposition der Hebelanordnung 66 schließen die beiden Hebel 80, 82 dagegen einen Winkel < 180° ein.

Im Übrigen entsprechen die Struktur und die Funktion des Passagiersitzes 10 gemäß der Figuren 8 bis 10 der Struktur und der Funktion des in den Figuren 2 und 3 veranschaulichten Passagiersitzes 10.

## Patentansprüche

1. Passagiersitz (10) mit:
- einer Rückenlehne (14),
- einem Sitzelement (16),
- einem Vergrößerungsmechanismus (30), der dazu eingerichtet ist, eine Gewichtskraft (F_{G}), die auf das Sitzelement (16) wirkt, wenn ein Benutzer auf dem Passagiersitz (10) sitzt, in eine Vergrößerung einer Tiefe einer für den Benutzer nutzbaren Sitzfläche (20) des Sitzelements (16) von einer Ruhepositionstiefe (T_{R}) in eine Nutzungspositionstiefe (T_{N}) umzusetzen, und
- einem Sitzelementträger (12), wobei das Sitzelement (16) um eine Schwenkachse (S1) relativ zu dem Sitzelementträger (12) zwischen einer Ruheposition, in der die Sitzfläche (20) des Sitzelements (16) relativ zu einer dem Sitzelement (16) zugewandten Trägeroberfläche (22) des Sitzelementträgers (12) geneigt ist, und einer Nutzungsposition, in der sich die Sitzfläche (20) des Sitzelements (16) im Wesentlichen parallel zu der Trägeroberfläche (22) des Sitzelementträgers (12) erstreckt, verschwenkbar an dem Sitzelementträger (12) befestigt ist, und wobei das Sitzelement (16) über die Schwenkachse (S1) derart mit dem Sitzelementträger (12) verbunden ist, dass ein der Rückenlehne (14) zugewandter hinterer Rand des Sitzelements (16) frei relativ zu dem Sitzelementträger (12) und relativ zu der Rückenlehne (14) verschwenkbar ist.

2. Passagiersitz nach Anspruch 1,
wobei der Vergrößerungsmechanismus (30) dazu eingerichtet ist, einen Wegfall der auf das Sitzelement (16) wirkenden Gewichtskraft (F_{G}) in eine Verringerung der Tiefe der für den Benutzer nutzbaren Sitzfläche (20) des Sitzelements (16) von der Nutzungspositionstiefe (T_{N}) in die Ruhepositionstiefe (T_{R}) umzusetzen.

3. Passagiersitz nach Anspruch 1 oder 2,
wobei das Sitzelement (16) um eine Schwenkachse (S1) schwenkbar ist, die insbesondere im Bereich eines von der Rückenlehne (14) abgewandten vorderen Rands des Sitzelementträgers (12) angeordnet ist, wobei in der Ruheposition, die Sitzfläche (20) des Sitzelements (16) mit der dem Sitzelement (16) zugewandten Trägeroberfläche (22) des Sitzelementträgers (12) insbesondere einen Winkel (α) von 5 bis 60°, vorzugsweise einen Winkel (α) von 10 bis 30° und insbesondere bevorzugt einen Winkel (α) von 10 bis 20° bildet.

4. Passagiersitz nach Anspruch 3,
der ferner einen Vorspannmechanismus (24) umfasst, der dazu eingerichtet ist, das Sitzelement (16) in seine Ruheposition vorzuspannen, wobei der Vorspannmechanismus (24) insbesondere ein Federelement (26) umfasst, dessen erstes Ende sich an der Trägeroberfläche (22) des Sitzelementträgers (12) abstützt und dessen zweites Ende sich an einer der Trägeroberfläche (22) des Sitzelementträgers (12) zugewandten Unterseite (28) des Sitzelements (16) abstützt.

5. Passagiersitz nach einem der Ansprüche 1 bis 4,
der ferner einen Getriebemechanismus (32) umfasst, der dazu eingerichtet ist, eine Schwenkbewegung des Sitzelements (16) um die Schwenkachse (S1) in eine Aktivierung bzw. Deaktivierung des Vergrößerungsmechanismus (30) umzusetzen.

6. Passagiersitz nach einem der Ansprüche 1 bis 5,
wobei der Vergrößerungsmechanismus (30) ein einen ersten Abschnitt (16a) des Sitzelements (16) bildendes Verlängerungselement (34) umfasst, das zwischen einer Ruheposition, in der eine Verlängerungsoberfläche (20a) des Verlängerungselements (34) relativ zu einem Sitzflächenabschnitt (20b) eines an das Verlängerungselement (34) angrenzenden zweiten Abschnitts (16b) des Sitzelements (16) gekrümmt oder geneigt ist oder parallel zu dem Sitzflächenabschnitt (20b) des zweiten Abschnitts (16b) des Sitzelements (16) unterhalb oder oberhalb des Sitzflächenabschnitts (20b) des zweiten Abschnitts (16b) des Sitzelements (16) angeordnet ist, und einer Nutzungsposition, in der die Verlängerungsoberfläche (20a) des Verlängerungselements (34) mit dem Sitzflächenabschnitt (20b) des zweiten Abschnitts (16b) des Sitzelements (16) fluchtet, verstellbar ist.

7. Passagiersitz nach Anspruch 6,
wobei das Verlängerungselement (34) in Form eines an dem zweiten Abschnitt (16b) des Sitzelements (16) befestigten FinRay^{®}-Effektbauteils, eines relativ zu dem zweiten Abschnitt (16b) des Sitzelements (16) um eine weitere Schwenkachse (S2) verschwenkbaren Schwenkelements oder eines relativ zu dem zweiten Abschnitt (16b) des Sitzelements (16) teleskopartig verschiebbaren Teleskopelements ausgebildet ist.

8. Passagiersitz nach den Ansprüchen 5 und 7,
wobei der Getriebemechanismus (32) ein Druckelement (36) umfasst, das zwischen einer Aktivierungsposition, in der das Druckelement (36) eine Druckkraft (F_{D}) auf ein in Form eines FinRay^{®}-Effektbauteils ausgebildetes Verlängerungselement (34) aufbringt und dadurch in seiner Ruheposition hält, und einer Deaktivierungsposition, in der das Druckelement (36) das in Form eines FinRay^{®}-Effektbauteils ausgebildete Verlängerungselement (34) freigibt und dadurch eine durch den FinRay^{®}-Effekt induzierte Bewegung des Verlängerungselements (34) in seine Nutzungsposition ermöglicht, bewegbar ist.

9. Passagiersitz nach Anspruch 8,
wobei der Getriebemechanismus (32) ferner eine Antriebseinrichtung (38) zum Bewegen des Druckelements (36) zwischen seiner Aktivierungsposition und seiner Deaktivierungsposition umfasst, wobei die Antriebseinrichtung (38) insbesondere ein drehfest mit der Schwenkachse (S1) verbundenes erstes Zahnrad (40) umfasst, das sich mit einem drehfest mit dem Druckelement (36) verbundenen zweiten Zahnrad (42) in Eingriff befindet, oder wobei die Antriebseinrichtung (38) insbesondere einen mit dem Druckelement (36) verbundenen Seilzug (52) umfasst, der dazu eingerichtet ist, zum Bewegen des Druckelements (36) aus seiner Aktivierungsposition in seine Deaktivierungsposition eine Zugkraft auf das Druckelement (36) aufzubringen.

10. Passagiersitz nach den Ansprüchen 5 und 7,
wobei der Getriebemechanismus (32) einen Betätigungshebel (60) umfasst, der zwischen einer Aktivierungsposition, in der der Betätigungshebel (60) eine Kraft auf ein in Form eines um eine weitere Schwenkachse (S2) verschwenkbaren Schwenkelements ausgebildetes Verlängerungselement (34) aufbringt, um das Verlängerungselement (34) in seiner Nutzungsposition zu halten, und einer Deaktivierungsposition, in der der Betätigungshebel (60) ein Verschwenken des Verlängerungselements (34) in seine Ruheposition ermöglicht oder induziert, bewegbar ist.

11. Passagiersitz nach Anspruch 10,
wobei der Betätigungshebel (60) über ein um eine Drehachse (D_{K}) drehbares Kinematikelement (62) derart mit einem an dem Sitzelement (16) befestigten weiteren Hebel (64) verbunden ist, dass eine Schwenkbewegung des Sitzelements (16) um die Schwenkachse (S1) über den weiteren Hebel (64) und das Kinematikelement (62) an den Betätigungshebel (60) übertragen wird, um den Betätigungshebel (60) zwischen seiner Aktivierungsposition und seiner Deaktivierungsposition zu bewegen.

12. Passagiersitz nach den Ansprüchen 5 und 7,
wobei der Getriebemechanismus (32) eine Hebelanordnung (66) umfasst, die zwischen einer Aktivierungsposition, in der die Hebelanordnung (66) eine Kraft auf ein in Form eines relativ zu dem zweiten Abschnitt (16b) des Sitzelements (16) teleskopartig verschiebbaren Teleskopelements ausgebildetes Verlängerungselement (34) aufbringt, um das Verlängerungselement (34) in seiner Nutzungsposition zu halten, und einer Deaktivierungsposition, in der die Hebelanordnung (66) eine Verschiebung des Verlängerungselements (34) in seine Ruheposition ermöglicht oder induziert, bewegbar ist.

13. Passagiersitz nach Anspruch 12,
wobei der Getriebemechanismus (32) ferner eine Antriebseinrichtung (70) zum Bewegen der Hebelanordnung (66) zwischen ihrer Aktivierungsposition und ihrer Deaktivierungsposition umfasst, wobei die Antriebseinrichtung (70) insbesondere einen mit der Hebelanordnung (66) verbundenen Seilzug (72) umfasst, der dazu eingerichtet ist, zum Bewegen der Hebelanordnung (66) aus ihrer Deaktivierungsposition in ihre Aktivierungsposition eine Zugkraft auf die Hebelanordnung (66) aufzubringen, und/oder wobei die Hebelanordnung (66) mindestens einen Hebel (80, 82) umfasst, dessen erstes Ende mit dem Seilzug (72) und dessen zweites Ende mit einer Betätigungsfläche (68) des Verlängerungselements (34) verbunden ist.

14. Passagiersitz nach einem der Ansprüche 1 bis 13,
der ferner umfasst:
- einen Verriegelungsmechanismus (44), der dazu eingerichtet ist, in einem verriegelten Zustand den Vergrößerungsmechanismus (30) zu deaktivieren, wobei der Verriegelungsmechanismus (44) insbesondere dazu eingerichtet ist, in einem verriegelten Zustand eine Schwenkbewegung des Sitzelements (16) um die Schwenkachse (S1) zu unterbinden, und/oder
- ein auf der Sitzfläche (20) des Sitzelements (16) angeordnetes elastisch verformbare Sitzpolster (50).

15. Passagierkabinenbereich (100), der umfasst:
- einen Hauptgang (102), der sich im Wesentlichen parallel zu einer Längsachse (L) des Passagierkabinenbereichs (100) erstreckt,
- einen von dem Hauptgang (102) abzweigenden Quergang (114) und
- mindestens einen Passagiersitz (10) nach einem der Ansprüche 1 bis 14, der in dem Passagierkabinenbereich (100) derart angrenzend an den Quergang (114) angeordnet ist, dass das Sitzelement (16) des Passagiersitzes (10) dem Quergang (114) zugewandt ist.

## Claims

1. Passenger seat (10), comprising:
- a backrest (14),
- a seat element (16),
- an enlargement mechanism (30), which is designed to convert a weight (FG) acting on the seat element (16) when a user sits on the passenger seat (10) into an increase in a depth of a seat surface (20), usable by the user, of the seat element (16) from an inoperative position depth (TR) into a use position depth (TN), and
- a seat element carrier (12), wherein the seat element (16) is fastened to the seat element carrier (12) so as to be pivotable about a pivot axis (S1) relative to the seat element carrier (12) between an inoperative position, in which the seat surface (20) of the seat element (16) is inclined relative to a carrier surface (22) of the seat element carrier (12), said carrier surface facing the seat element (16), and a use position, in which the seat surface (20) of the seat element (16) extends substantially parallel to the carrier surface (22) of the seat element carrier (12), and wherein the seat element (16) is connected via the pivot axis (S1) to the seat element carrier (12) in such a manner that a rear edge of the seat element (16) facing the backrest (14) is pivotable freely relative to the seat element carrier (12) and relative to the backrest (14).

2. Passenger seat according to Claim 1,
wherein the enlargement mechanism (30) is designed to convert a cessation of the weight (FG) acting on the seat element (16) into a reduction in the depth of the seat surface (20), usable by the user, of the seat element (16) from the use position depth (TN) into the inoperative position depth (TR).

3. Passenger seat according to Claim 1 or 2,
wherein the seat element (16) is pivotable about a pivot axis (S1), which is arranged in particular in the region of a front edge of the seat element carrier (12) facing away from the backrest (14), wherein, in the inoperative position, the seat surface (20) of the seat element (16) forms in particular an angle (□) of 5 to 60°, preferably an angle (□) of 10 to 30° and particularly preferably an angle (□) of 10 to 20° with the carrier surface (22) of the seat element carrier (12), said carrier surface facing the seat element (16).

4. Passenger seat according to Claim 3,
which furthermore comprises a pretensioning mechanism (24) which is designed to pretension the seat element (16) into its inoperative position, wherein the pretensioning mechanism (24) in particular comprises a spring element (26), the first end of which is supported on the carrier surface (22) of the seat element carrier (12) and the second end of which is supported on a lower side (28) of the seat element (16), said lower side facing the carrier surface (22) of the seat element carrier (12).

5. Passenger seat according to one of Claims 1 to 4,
which furthermore comprises a gear mechanism (32) which is designed to convert a pivoting movement of the seat element (16) about the pivot axis (S1) into an activation or deactivation of the enlargement mechanism (30).

6. Passenger seat according to one of Claims 1 to 5,
wherein the enlargement mechanism (30) comprises an extension element (34) which forms a first portion (16a) of the seat element (16) and is adjustable between an inoperative position, in which an extension surface (20a) of the extension element (34) is curved or inclined relative to a seat surface portion (20b) of a second portion (16b) of the seat element (16), which portion is adjacent to the extension element (34) or is arranged parallel to the seat surface portion (20b) of the second portion (16b) of the seat element (16) below or above the seat surface portion (20b) of the second portion (16b) of the seat element (16), and a use position, in which the extension surface (20a) of the extension element (34) is aligned with the seat surface portion (20b) of the second portion (16b) of the seat element (16).

7. Passenger seat according to Claim 6,
wherein the extension element (34) is designed in the form of a FinRay^{®} effect component fastened to the second portion (16b) of the seat element (16), a pivot element which is pivotable about a further pivot axis (S2) relative to the second portion (16b) of the seat element (16) or a telescopic element which is displaceable telescopically relative to the second portion (16b) of the seat element (16).

8. Passenger seat according to Claims 5 and 7,
wherein the gear mechanism (32) comprises a pressure element (36) which is movable between an activation position, in which the pressure element (36) applies a compressive force (FD) to an extension element (34), which is designed in the form of a FinRay^{®} effect component, and thereby holds same in its inoperative position, and a deactivation position, in which the pressure element (36) releases the extension element (34), which is designed in the form of a FinRay^{®} effect component, and thereby permits a movement, induced by the FinRay^{®} effect, of the extension element (34) into its use position.

9. Passenger seat according to Claim 8,
wherein the gear mechanism (32) furthermore comprises a drive device (38) for moving the pressure element (36) between its activation position and its deactivation position, wherein the drive device (38) comprises in particular a first gearwheel (40) which is connected to the pivot axis (S1) for rotation therewith and is in engagement with a second gearwheel (42) which is connected to the pressure element (36) for rotation therewith, or wherein the drive device (38) comprises in particular a cable pull (52) which is connected to the pressure element (36) and is designed to apply a tensile force to the pressure element (36) in order to move the pressure element (36) from its activation position into its deactivation position.

10. Passenger seat according to Claims 5 and 7,
wherein the gear mechanism (32) comprises an actuating lever (60) which is movable between an activation position, in which the actuating lever (60) applies a force to an extension element (34) designed in the form of a pivot element, which is pivotable about a further pivot axis (S2), in order to hold the extension element (34) in its use position, and a deactivation position, in which the actuating lever (60) permits or induces a pivoting of the extension element (34) into its inoperative position.

11. Passenger seat according to Claim 10,
wherein the actuating lever (60) is connected via a kinematic element (62), which is rotatable about an axis of rotation (DK), to a further lever (64), which is fastened to the seat element (16), in such a manner that a pivoting movement of the seat element (16) about the pivot axis (S1) is transmitted via the further lever (64) and the kinematic element (62) to the actuating lever (60) in order to move the actuating lever (60) between its activation position and its deactivation position.

12. Passenger seat according to Claims 5 and 7,
wherein the gear mechanism (32) comprises a lever arrangement (66) which is movable between an activation position, in which the lever arrangement (66) applies a force to an extension element (34), which is designed in the form of a telescopic element which is displaceable telescopically relative to the second portion (16b) of the seat element (16), in order to hold the extension element (34) in its use position, and a deactivation position, in which the lever arrangement (66) permits or induces a displacement of the extension element (34) into its inoperative position.

13. Passenger seat according to Claim 12,
wherein the gear mechanism (32) furthermore comprises a drive device (70) for moving the lever arrangement (66) between its activation position and its deactivation position, wherein the drive device (70) comprises in particular a cable pull (72) which is connected to the lever arrangement (66) and is designed to apply a tensile force to the lever arrangement (66) for moving the lever arrangement (66) from its deactivation position into its activation position, and/or wherein the lever arrangement (66) comprises at least one lever (80, 82), the first end of which is connected to the cable pull (72) and the second end of which is connected to an actuating surface (68) of the extension element (34).

14. Passenger seat according to one of Claims 1 to 13,
which furthermore comprises:
- a locking mechanism (44) which is designed in order, in a locked state, to deactivate the enlargement mechanism (30), wherein the locking mechanism (44) is designed in particular in order, in a locked state, to prevent a pivoting movement of the seat element (16) about the pivot axis (S1), and/or
- an elastically deformable seat cushion (50) arranged on the seat surface (20) of the seat element (16).

15. Passenger cabin area (100), which comprises:
- a main aisle (102) which extends substantially parallel to a longitudinal axis (L) of the passenger cabin area (100),
- a transverse aisle (114) branching off from the main aisle (102), and
- at least one passenger seat (10) according to one of Claims 1 to 14 which is arranged in the passenger cabin area (100) adjacent to the transverse aisle (114) in such a manner that the seat element (16) of the passenger seat (10) faces the transverse aisle (114).

## Revendications

1. Siège de passager (10) avec :
- un dossier (14),
- un élément de siège (16),
- un mécanisme d'agrandissement (30), qui est adapté pour convertir une force de poids (FG) agissant sur l'élément de siège (16) lorsqu'un utilisateur s'assoit sur le siège de passager (10) en un agrandissement d'une profondeur d'une surface de siège de l'élément de siège (16) utilisable par l'utilisateur (20) d'une profondeur de position de repos (TR) à une profondeur de position d'utilisation (TN), et
- un support d'élément de siège (12), l'élément de siège (16) étant fixé au support d'élément de siège (12) de manière pivotante autour d'un axe de pivotement (51) par rapport au support d'élément de siège (12) entre une position de repos, dans laquelle la surface de siège (20) de l'élément de siège (16) est inclinée par rapport à une surface de support (22) du support d'élément de siège (12) tournée vers l'élément de siège (16), et une position d'utilisation dans laquelle la surface de siège (20) de l'élément de siège (16) s'étend essentiellement parallèlement à la surface de support (22) du support d'élément de siège (12), et l'élément de siège (16) étant relié au support d'élément de siège (12) par l'intermédiaire de l'axe de pivotement (S1) de telle sorte qu'un bord arrière de l'élément de siège (16) tourné vers le dossier (14) peut pivoter librement par rapport au support d'élément de siège (12) et par rapport au dossier (14).

2. Siège de passager selon la revendication 1, dans lequel le mécanisme d'agrandissement (30) est adapté pour convertir une suppression de la force de poids (FG) agissant sur l'élément de siège (16) en une réduction de la profondeur de la surface de siège (20) de l'élément de siège (16) utilisable par l'utilisateur de la profondeur de position d'utilisation (TN) à la profondeur de position de repos (TR).

3. Siège de passager selon la revendication 1 ou 2, dans lequel l'élément de siège (16) peut pivoter autour d'un axe de pivotement (S1) qui est disposé notamment dans la zone d'un bord avant du support d'élément de siège (12) détourné du dossier (14), dans lequel, en position de repos, la surface de siège (20) de l'élément de siège (16) forme avec la surface de support (22) du support d'élément de siège (12) tournée vers l'élément de siège (16) notamment un angle (α) de 5 à 60°, de préférence un angle (α) de 10 à 30° et notamment de préférence un angle (α) de 10 à 20°.

4. Siège de passager selon la revendication 3, qui comprend en outre un mécanisme de précontrainte (24), qui est adapté pour précontraindre l'élément de siège (16) vers sa position de repos, le mécanisme de précontrainte (24) comprenant notamment un élément de ressort (26), dont la première extrémité s'appuie sur la surface de support (22) du support d'élément de siège (12) et dont la deuxième extrémité s'appuie sur un côté inférieur (28) de l'élément de siège (16) tourné vers la surface de support (22) du support d'élément de siège (12).

5. Siège de passager selon l'une quelconque des revendications 1 à 4, qui comprend en outre un mécanisme de transmission (32) adapté pour convertir un mouvement de pivotement de l'élément de siège (16) autour de l'axe de pivotement (S1) en une activation ou une désactivation du mécanisme d'agrandissement (30).

6. Siège de passager selon l'une quelconque des revendications 1 à 5, dans lequel le mécanisme d'agrandissement (30) comprend un élément d'allongement (34) formant une première section (16a) de l'élément de siège (16) qui peut être déplacé entre une position de repos, dans laquelle une surface d'allongement (20a) de l'élément d'allongement (34) est incurvée ou inclinée par rapport à une section de surface de siège (20b) d'une deuxième section (16b) de l'élément de siège (16) adjacente à l'élément d'allongement (34) ou est disposée parallèlement à la section de surface de siège (20b) de la deuxième section (16b) de l'élément de siège (16), en dessous ou au-dessus de la section de surface de siège (20b) de la deuxième section (16b) de l'élément de siège (16), et une position d'utilisation dans laquelle la surface d'allongement (20a) de l'élément d'allongement (34) est alignée avec la section de surface de siège (20b) de la deuxième section (16b) de l'élément de siège (16).

7. Siège de passager selon la revendication 6, dans lequel l'élément d'allongement (34) est réalisé sous la forme d'un composant à effet FinRay^{®} fixé à la deuxième section (16b) de l'élément de siège (16), d'un élément pivotant pouvant pivoter autour d'un autre axe de pivotement (S2) par rapport à la deuxième section (16b) de l'élément de siège (16) ou d'un élément télescopique pouvant coulisser de manière télescopique par rapport à la deuxième section (16b) de l'élément de siège (16).

8. Siège de passager selon les revendications 5 et 7, dans lequel le mécanisme de transmission (32) comprend un élément de pression (36) qui peut être déplacé entre une position d'activation, dans laquelle l'élément de pression (36) applique une force de pression (FD) à un élément d'allongement (34) réalisé sous la forme d'un composant à effet FinRay^{®}, le maintenant ainsi dans sa position de repos, et une position de désactivation, dans laquelle l'élément de pression (36) libère l'élément d'allongement (34) réalisé sous la forme d'un composant à effet FinRay^{®} et permet ainsi un mouvement de l'élément d'allongement (34) induit par l'effet FinRay^{®} vers sa position d'utilisation.

9. Siège de passager selon la revendication 8, dans lequel le mécanisme de transmission (32) comprend en outre un dispositif d'entraînement (38) pour déplacer l'élément de pression (36) entre sa position d'activation et sa position de désactivation, le dispositif d'entraînement (38) comprenant notamment une première roue dentée (40) reliée de manière solidaire en rotation à l'axe de pivotement (51), qui est en prise avec une deuxième roue dentée (42) reliée de manière solidaire en rotation à l'élément de pression (36), ou dans lequel le dispositif d'entraînement (38) comprend notamment un câble de traction (52) relié à l'élément de pression (36), qui est adapté pour appliquer une force de traction sur l'élément de pression (36) pour déplacer l'élément de pression (36) de sa position d'activation à sa position de désactivation.

10. Siège de passager selon les revendications 5 et 7, dans lequel le mécanisme de transmission (32) comprend un levier d'actionnement (60) qui peut être déplacé entre une position d'activation, dans laquelle le levier d'actionnement (60) applique une force à un élément d'allongement (34) réalisé sous la forme d'un élément pivotant pouvant pivoter autour d'un autre axe de pivotement (S2), afin de maintenir l'élément d'allongement (34) dans sa position d'utilisation, et une position de désactivation, dans laquelle le levier d'actionnement (60) permet ou induit un pivotement de l'élément d'allongement (34) vers sa position de repos.

11. Siège de passager selon la revendication 10, dans lequel le levier d'actionnement (60) est relié à un autre levier (64) fixé à l'élément de siège (16) par l'intermédiaire d'un élément cinématique (62) pouvant tourner autour d'un axe de rotation (DK) de telle sorte qu'un mouvement de pivotement de l'élément de siège (16) autour de l'axe de pivotement (S1) est transmis au levier d'actionnement (60) par l'intermédiaire de l'autre levier (64) et de l'élément cinématique (62) afin de déplacer le levier d'actionnement (60) entre sa position d'activation et sa position de désactivation.

12. Siège de passager selon les revendications 5 et 7, dans lequel le mécanisme de transmission (32) comprend un agencement de levier (66) qui peut être déplacé entre une position d'activation, dans laquelle l'agencement de levier (66) applique une force à un élément d'allongement (34) réalisé sous la forme d'un élément télescopique pouvant coulisser de manière télescopique par rapport à la deuxième section (16b) de l'élément de siège (16) afin de maintenir l'élément d'allongement (34) dans sa position d'utilisation, et une position de désactivation, dans laquelle l'agencement de levier (66) permet ou induit un coulissement de l'élément d'allongement (34) vers sa position de repos.

13. Siège de passager selon la revendication 12, dans lequel le mécanisme de transmission (32) comprend en outre un dispositif d'entraînement (70) pour déplacer l'agencement de levier (66) entre sa position d'activation et sa position de désactivation, le dispositif d'entraînement (70) comprenant notamment un câble de traction (72) relié à l'agencement de levier (66), qui est adapté pour appliquer une force de traction sur l'agencement de levier (66) pour déplacer l'agencement de levier (66) de sa position de désactivation à sa position d'activation, et/ou dans lequel l'agencement de levier (66) comprend au moins un levier (80, 82) dont la première extrémité est reliée au câble de traction (72) et dont la deuxième extrémité est reliée à une surface d'actionnement (68) de l'élément d'allongement (34).

14. Siège de passager selon l'une quelconque des revendications 1 à 13, qui comprend en outre :
- un mécanisme de verrouillage (44), qui est adapté pour désactiver le mécanisme d'agrandissement (30) dans un état verrouillé, le mécanisme de verrouillage (44) étant notamment adapté pour empêcher un mouvement de pivotement de l'élément de siège (16) autour de l'axe de pivotement (S1) dans un état verrouillé, et/ou
- un coussin de siège déformable élastiquement (50) disposé sur la surface de siège (20) de l'élément de siège (16).

15. Zone de cabine de passagers (100), qui comprend :
- un couloir principal (102), qui s'étend essentiellement parallèlement à un axe longitudinal (L) de la zone de cabine de passagers (100),
- un couloir transversal (114) se ramifiant à partir du couloir principal (102), et
- au moins un siège de passager (10) selon l'une quelconque des revendications 1 à 14, qui est disposé dans la zone de cabine de passagers (100) de manière adjacente au couloir transversal (114) de telle sorte que l'élément de siège (16) du siège de passager (10) est tourné vers le couloir transversal (114).
